# FASCICULE DE BREVET EUROPEEN

(11) **EP 3 408 470 B1**
(45) Date de publication et mention de la délivrance du brevet: **09.10.2019**
(21) Numéro de dépôt: 17705700.7
(22) Date de dépôt: 26.01.2017
(51) Int. Cl.: E04H 4/10, A63C 19/12, B60J 7/08, E04F 10/06

(54) **DISPOSITIF DE COUVERTURE D'UNE SURFACE COMPRENANT DES MOYENS D'ENCLENCHEMENT**
VORRICHTUNG ZUR VERKLEIDUNG EINER OBERFLÄCHE MIT INEINANDERGREIFENDEN MITTELN
DEVICE FOR COVERING A SURFACE INCLUDING INTERLOCKING MEANS

(30) Priorité: 25.01.2016 BE 201605058
(43) Date de publication de la demande: 05.12.2018
(73) Titulaire: Becoflex, 1440 Wauthier-Braine (BE)
(72) Inventeur: COENRAETS, Benoît, 1440 Wauthier-Braine (BE)
(74) Mandataire: Connor, Marco Tom
(86) Numéro de dépôt international: PCT/IB2017/000039
(87) Numéro de publication internationale: WO 2017/130053

(56) Documents cités:
- WO-A1-2010/054960
- WO-A1-2012/095264
- WO-A1-2014/064138
- FR-A1- 2 803 769

## Description

### DOMAINE DE L'INVENTION

L'invention se rapporte à un dispositif de couverture d'une surface, aisé à mettre en oeuvre et répondant au mieux aux exigences de l'application concernée. En particulier, la présente invention concerne un dispositif de couverture dans lequel la couverture comprend un système de fixation particulier permettant l'ancrage réversible des bords longitudinaux de la couverture lors de son déploiement.

### ARRIÈRE-PLAN TECHNOLOGIQUE

On applique des couvertures sur des surfaces pour des raisons qui dépendent de la nature de ces surfaces. Ainsi, dans le cas d'un bassin tel qu'une piscine la couverture peut éviter la pollution par des feuilles ou des animaux, peut faire économiser de l'énergie, de l'eau et des réactifs et peut ou doit assurer la sécurité des personnes en particulier des enfants. Dans un bassin de dessalement ou d'autres traitements d'un fluide, une couverture permet d'éviter la dilution de liquide due à la pluie ou l'évaporation excessive due à la chaleur.

Lorsqu'il s'agit d'un terrain de sport tel qu'un terrain de tennis externe en terre battue ou gazon, une couverture permet de le protéger contre les intempéries, et en particulier une pluie intermittente. Par ailleurs, une caisse de véhicule est couverte notamment pour assurer la stabilité de la charge à la dépression causée par le déplacement du véhicule et la protéger contre les intempéries. On utilise également des couvertures en tant que stores pour serres, jardins d'hiver ou fenêtres de véhicules afin d'éviter toute surchauffe à l'intérieur, et en tant que protection solaire pour auvents de terrasse.

Dans tous les cas de figure, on recherche généralement un dispositif de couverture économique permettant une mise à couvert et à découvert aisée, sûre, reproductible et rapide, nécessitant un minimum d'intervention humaine et, surtout, ayant une durée de vie aussi longue que possible. De nombreux dispositifs de recouvrement d'une surface ont été développés, allant des modèles basiques aux plus sophistiqués, Par exemple, un premier dispositif tout à fait basique utilisé dans le cas d'une piscine comprend une couverture gonflable ou non que l'on déroule, étend et fixe manuellement sur les bords de la piscine. Ce type de dispositif est illustré par exemple dans les documents US6691334, GB2379163 et FR2652373. Il est clair qu'ici compte tenu de la manutention et du stockage, seules des piscines d'assez petite taille sont concernées.

Pour des surfaces de plus grandes dimensions on peut recourir à des dispositifs de couverture présentant en outre un tambour fixé à l'une des extrémités transversales de la surface à protéger. La couverture est déployée manuellement par traction, en se déroulant du tambour, pour couvrir la surface. Le poids et les dimensions de la couverture nécessitent l'intervention de plusieurs personnes afin qu'elle se mette en place convenablement. On effectue le retrait de la couverture en l'enroulant autour du tambour par rotation : la couverture se retire alors de la surface en glissant sur celle-ci. La rotation du tambour pour retirer la couverture est réalisée manuellement ou au moyen d'un moteur électrique ayant la puissance suffisante pour tirer la couverture complètement déployée. Il faut souligner qu'un déploiement aisé de la couverture, en particulier dans le cas d'une piscine, contribue à sa sécurité, car une manipulation pénible entraverait son utilisation. Le déploiement (c'est-à-dire son déroulement du tambour) et le retrait (c'est-à-dire son ré-enroulement sur le tambour) de la couverture peut se faire manuellement ou automatiquement à l'aide d'un moteur. Des dispositifs de couverture automatiques sont illustrés notamment dans les documents suivants : US3574979, GB2199741, US2005/0097834, CA2115113, US2001/0023506, US5930848, US4001900 et sur le site www.aquatop.be. Mais ce type de dispositifs de couverture à tambour fixe évoqués ci-dessus ont pour inconvénient majeur de faire glisser la couverture qui est traînée sur la surface à protéger lors de son déploiement et de son retrait ce qui engendre son usure prématurée ainsi qu'un travail supérieur dû aux frottements ainsi générés.

Dans la présente demande, les termes « longitudinal » « transversal » et leurs dérivés se réfèrent respectivement à la direction de déplacement du tambour et à la direction de l'axe de révolution de celui-ci.

Afin de pallier à l'inconvénient des dispositifs à tambour fixe, un type alternatif de dispositif de couverture à tambour existe, dans lequel le tambour motorisé est monté sur un mécanisme de translation longitudinale. Celui-ci déplace le tambour au-dessus de la surface à couvrir ce qui permet littéralement de « poser » la couverture sur la surface, lors de son déploiement, en la déroulant simultanément du tambour pendant son déplacement longitudinal, puis de la soulever, lors de son retrait, en l'enroulant simultanément sur le tambour. La couverture ne glisse donc pas sur la surface ni lors de son déploiement ni lors de son retrait. Le dispositif de couverture comprend également un système de fixation de la couverture à une extrémité transversale de la surface à couvrir de sorte que la translation et la rotation du tambour entraînent le déroulement ou l'enroulement de la couverture au-dessus de la surface à couvrir. Des exemples de dispositifs automatiques de ce type sont divulgués par exemple dans les documents suivants : WO2005/026473, FR2900951, DE2257231, FR2893651, FR2789425, FR2743502, EP1719858. Par ailleurs, une variante complètement manuelle du tambour monté à translation longitudinale est illustrée dans les documents WO2007/036625, US4195370.

Les dispositifs de couverture à tambour mobile illustrés ci-dessus prévoient seulement une fixation d'un bord transversal de la couverture à une extrémité transversale de la surface à couvrir, le bord opposé restant solidaire du tambour. Aucun système de fixation des bords longitudinaux de la couverture n'est prévu. En particulier dans le cas d'une piscine, des personnes s'engageant sur la couverture ne seraient pas retenues par ses bords longitudinaux et pourraient ainsi être précipitées dans l'eau. En outre, le manque d'étanchéité de la couverture sur ses bords longitudinaux peut favoriser l'introduction dans la piscine de saletés, feuilles mortes et brindilles ainsi que de petits animaux tels que des souris ou des serpents. Des dispositifs plus sophistiques ont été proposés permettant de fixer de manière réversible les bords longitudinaux de la couverture lors de son déploiement, tel que dans le document FR2803769 qui prévoit un système de fixation des bords longitudinaux de la couverture constitué de tronçons de grilles se soulevant puis se rabattant tronçon par tronçon sur lesdits bords longitudinaux de la couverture en maintenant ces bords à l'intérieur d'un caniveau au fur à mesure du déroulement de celle-ci. Dans cette conception, les bords longitudinaux de la couverture sont pincés sans être verrouillés, ce qui procure une moindre sécurité en particulier dans le cas de piscines.

Un autre système avantageux permettant simultanément de fixer les bords longitudinaux de la couverture lors de son déploiement et d'exercer une force de traction transversale sur celle-ci pour la tendre parfaitement a été décrit dans WO2010/010152, WO2010/054960, WO2014/064138, WO2012/095264 et dans la demande de brevet belge BE2012/0725. Dans ces dispositifs, les bords longitudinaux de la couverture sont munis d'un jonc ou bourrelet qui est introduit dans l'ouverture orientée vers le haut d'un rail en forme de profilé de section en « U », avec une ou deux ailes refermant partiellement ladite ouverture. Le bourrelet venant se glisser sous une aile et retenue dans cette position par des moyens de fixations adéquats, permet de fixer solidement les bords longitudinaux de la couverture. Dans de tels systèmes, des poulies de renvois sont généralement utilisées pour guider et positionner le bourrelet vis-à-vis l'ouverture du rail correspondant lors de la translation dans le premier sens du tambour entraînant le déroulement de la couverture.

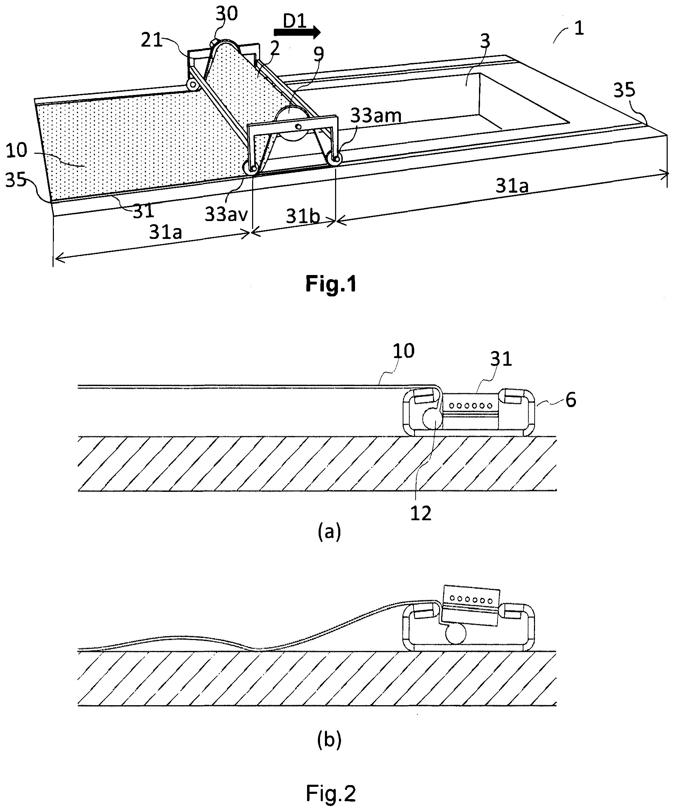

Si un tel type de système de verrouillage fonctionne normalement bien, il arrive que le bourrelet ne se positionne pas convenablement sous l'aile du rail correspondant, ne permettant pas aux moyens de fixation de fixer solidement le bord longitudinal de la couverture concerné. Cette situation est illustrée à la Figure 2, montrant une coupe transversale d'un rail (6) dans lequel est inséré le bourrelet (12) d'une couverture (10), fixé sous une aile du rail par des moyens de fixation (31). La Figure 2(a) illustre le système de fixation tel qu'il devrait fonctionner avec le bourrelet (12) arrangée sous l'aile du rail et bloquée dans cette position par les moyens de fixation (31). La Figure 2(b) montre ce qui peut arriver, surtout dans le cas de couvertures n'étant pas soumises à une tension transversale pendant leur déploiement (par exemple dans le cas de couvertures flottantes pour piscines). Le bourrelet est bien glissé dans l'ouverture (14) du rail, mais n'est pas rangé sous l'aile correspondante. En conséquence, les moyens de fixation (31) n'ont pas la place pour s'insérer convenablement et le bord longitudinal de la couverture n'est pas fixé aussi solidement qu'il ne devrait l'être. Cette situation peut être dangereuse, car confiant de la solidité attendue d'un tel système, une personne peut s'aventurer sur la couverture dont les bords peuvent se désolidariser des rails sous l'effet du poids et de leur mauvaise fixation.

La présente invention propose une solution qui permet de garantir la bonne fixation des bords longitudinaux d'une couverture dans les rails correspondants par un bon positionnement systématique des bourrelets desdits bords longitudinaux sous les ailes correspondantes des rails.

### RÉSUMÉ DE L'INVENTION

L'invention est telle que définie dans la revendication principale et des variantes préférées sont définies dans les revendications dépendantes. La présente invention comporte notamment un dispositif de couverture d'une surface comprenant :
(a) Une couverture sensiblement rectangulaire ayant deux bords longitudinaux opposés l'un à l'autre et deux bords transversaux opposés l'un à l'autre, chaque bord longitudinal étant muni d'un bourrelet en saillie, s'étendant le long dudit bord,
(b) un tambour monté à rotation apte à enrouler et dérouler la couverture, ledit tambour étant monté sur un mécanisme de translation longitudinale le long de rails placés de part et d'autre de ladite surface et constitués chacun d'un profilé ayant une ouverture sur une de ses faces et orientée à l'opposé de la surface à couvrir, ladite face comprenant au moins une aile adjacente située du côté adjacent à la surface à couvrir et fermant partiellement ladite ouverture, ledit mécanisme de translation permettant la translation longitudinale du tambour dans un premier sens entraînant le déroulement de la couverture et son déploiement au-dessus de la surface à couvrir et dans un second sens entraînant l'enroulement de la couverture et son retrait de ladite surface,
(c) une surface de renvoi pourvue de chaque côté de la surface à couvrir permettant de guider et positionner ledit bourrelet de chaque bord de la couverture vis-à-vis l'ouverture du rail correspondant lors de la translation dans le premier sens du tambour entraînant le déroulement de la couverture,
(d) un système de verrouillage continu du bourrelet des bords longitudinaux de la couverture dans l'ouverture desdits rails, permettant, une fois que le bourrelet ait été engagé dans l'ouverture, de le verrouiller en le coinçant sous l'aile adjacente du rail correspondant au fur et à mesure du déroulement de la couverture et, lors de la translation du tambour dans le second sens, de libérer le bourrelet en lui permettant de se désenclencher au fur et à mesure de l'enroulement de la couverture,

Le dispositif de la présente invention comprend de plus un patin d'enclenchement du bourrelet, inséré à glissement dans chaque rail, en aval des surfaces de renvois dans le premier sens de translation, ledit patin d'enclenchement comprenant :
(a) une portion supérieure située hors des rails et fixée au mécanisme de translation de façon à se déplacer le long des rails avec le tambour, et
(b) une portion inférieure, insérée dans l'ouverture du rail correspondant, comprenant une base inférieure dont la géométrie est telle que le bourrelet soit guidé sous l'aile adjacente.

Dans une variante préférée, le système de verrouillage comprend de plus deux courroies flexibles (31), chacune étant apte,
- lors de la translation du tambour dans le premier sens, à se déposer au fur et à mesure du déroulement de la couverture dans l'ouverture du rail correspondant une fois que le bourrelet ait été engagé sous l'aile adjacente de ce dernier et ainsi de l'y coincer et,
- lors de la translation du tambour dans le second sens, à se retirer de ladite ouverture, libérant ainsi le bourrelet et lui permettant de se désenclencher au fur et à mesure de l'enroulement de la couverture.

Dans ladite variante préférée, le mécanisme de déplacement comprend avantageusement un chariot monté sur les rails et surplombant transversalement la surface à couvrir et supportant le tambour comprenant à chacune de ses extrémités:
- une roue d'entraînement (9) dont l'axe de rotation est parallèle à celui dudit tambour;
- au moins une première roulette aval et au moins une seconde roulette amont reposant sur les rails et permettant la translation longitudinale du chariot, et étant montées la première en aval et la seconde en amont de la roue d'entraînement dans le premier sens de déplacement, et constituant avec celle-ci un triangle dont la roue d'entraînement forme un sommet supérieur;
et dans lequel les deux courroies flexibles sont fixées uniquement à chacune de leurs extrémités aux quatre coins de la surface à couvrir et s'étendent le long des bords longitudinaux de la surface à couvrir de la manière suivante :
- elles sont disposées dans l'ouverture des rails dans les sections latérales comprises entre un point de fixation et la roulette la plus proche dudit point de fixation, et
- elles coiffent sans glissement la roue d'entraînement dans la section centrale comprise entre les deux roulettes.

Il est préféré que dans un tel mécanisme, chaque courroie flexible coiffe la roulette aval qui la dépose dans l'ouverture du rail correspondant et dans lequel le patin d'enclenchement est situé entre ladite roulette aval et la poulie de renvois correspondantes.

Le mécanisme peut comprendre de plus un patin de fixation inséré à glissement dans chaque rail et situé entre la poulie de renvois de la roulette amont correspondantes, ledit patin de fixation comprenant :
- une portion supérieure, située hors des rails et fixée au mécanisme de translation de façon à se déplacer le long des rails avec le tambour, et
- une portion inférieure, insérée dans l'ouverture (14) du rail correspondant, ladite portion inférieure comprenant un ressaut en saillie s'étendant sous l'aile distale (6b) du rail correspondant et empêchant ledit patin de fixation et donc d'assister le patin d'enclenchement (50) à empêcher ledit mécanisme de translation longitudinale auquel il est fixé de sortir de l'ouverture du rail correspondant.

La base inférieure du patin d'enclenchement comprend de préférence une portion substantiellement plane de géométrie sensiblement rectangulaire à laquelle on a soustrait une portion définissant un évidement situé du côté adjacent à la surface à couvrir et ayant une largeur maximale et une hauteur permettant d'accommoder le bourrelet, ledit évidement s'étendant longitudinalement le long de la base inférieure depuis son extrémité amont où l'évidement a sa largeur maximale et se referme progressivement avant d'atteindre son extrémité avale, ledit évidement permettant de guider le bourrelet sous l'aile adjacente (6a) du rail. La portion amont de la base inférieure est avantageusement biseautée afin de faciliter l'insertion du bourrelet dans l'évidement du patin d'enclenchement.

Dans une variante préférée, le rail est un profilé en forme de C, comprenant outre l'aile adjacente une deuxième aille distale séparée de la surface à couvrir par l'ouverture et l'aile adjacente et fermant partiellement le côté opposé de l'ouverture fermé par l'aile adjacente et dans lequel chaque patin d'enclenchement comprend un ressaut en saillie s'étendant sous l'aile distale ou sous l'aile adjacente du rail correspondant et empêchant ledit patin d'enclenchement et donc ledit mécanisme de translation longitudinale auquel il est fixé, de sortir de l'ouverture du rail correspondant.

La surface de renvoi peut être au moins partiellement formée d'une surface intérieure d'une rainure disposée dans la portion supérieure du patin d'enclenchement:
- ladite rainure ayant une ouverture faciale s'étendant sur une surface parallèle au rail correspondant et orientée vers la surface à couvrir,
- ladite ouverture ayant une largeur inférieure à la dimension du bourrelet se trouvant à l'intérieur de la rainure et supérieure à l'épaisseur de la couverture qui sort de la rainure par ladite ouverture, de sorte que la couverture peut glisser le long de la rainure mais le bourrelet ne peut en sortir par l'ouverture faciale, et
- ladite rainure comprend une section courbée permettant d'amener de manière tangentielle le bourrelet de la couverture vers la portion inférieure du patin d'enclenchement et ainsi sous l'aile adjacent du rail correspondant.

La portion supérieure du patin d'insertion peut alors comprendre une poulie de renvoi sensiblement cylindrique montée à rotation selon un axe parallèle à la direction transverse de la couverture, ladite poulie de renvoi ayant une extrémité distale, éloignée de la surface à couvrir, et une extrémité proximale, adjacente à ladite surface, et dans lequel la section courbée est formée au moins partiellement par l'extrémité distale de la poulie de renvoi contre laquelle s'appuie le bourrelet correspondant de la couverture qui enveloppe partiellement ladite poulie de renvois afin de changer d'orientation. L'extrémité distale de chaque poulie de renvoi situé de part et d'autre de la surface à couvrir s'appuie de préférence sur le bourrelet correspondant, appliquant ainsi une contrainte en traction sur la couverture dans la direction transversale lors de son déroulement, ladite contrainte étant maintenue lors du verrouillage de la couverture dans les rails. Le dispositif peut de plus comprendre un palier tenseur monté à rotation sur chaque patin d'enclenchement, selon un axe de rotation transverse, de préférence normal aux bords transversaux de la couverture et qui guide le bourrelet de la couverture dans la rainure du patin d'enclenchement correspondant.

Un dispositif selon la présente invention peut servir à couvrir une des surfaces suivantes :
(a) un bassin rempli ou non d'un liquide tel qu'une piscine, un bassin de rétention, de traitement ou de désalinisation des eaux ;
(b) un terrain de sports, tel un terrain de tennis ou de cricket ;
(c) une caisse de véhicule,
(d) une surface vitrée telle une serre, un jardin d'hiver ou une fenêtre de véhicule.

Une surface est avantageusement couverte par une couverture utilisant un dispositif de couverture tel que défini ci-dessus, par le procédé suivant :
(a) Le chariot se trouve à une extrémité de la surface à couvrir, avec un bord transversal de la couverture étant fixé à cette extrémité de la surface et le reste de la couverture étant enroulé autour du tambour,
(b) Avancer le chariot dans le premier sens au-dessus de la surface à couvrir le long des rails, et ainsi dérouler du tambour la couverture qui se déploie sur la portion de surface en aval du tambour et, en même temps, guider et maintenir le bourrelet de chaque bord longitudinal de la couverture vis-à-vis de l'ouverture du rail correspondant au fur et à mesure que le tambour avance,
(c) Par l'intermédiaire du patin d'enclenchement, forcer le bourrelet dans l'ouverture (14) du rail et le guider sous l'aile adjacente dudit rail, où
(d) le bourrelet y est bloqué par l'insertion immédiatement après dans la même ouverture de la section latérale de courroie directement adjacente à la roulette aval (33av) en aval du sens de translation du chariot.

### BRÈVE DESCRIPTION DES FIGURES

Ces aspects ainsi que d'autres aspects de l'invention seront clarifiés dans la description détaillée de modes de réalisation particuliers de l'invention, référence étant faite aux dessins des figures, dans lesquelles :
Fig.1 est une vue d'ensemble en perspective d'une surface avec le tambour en position telle qu'une partie de la surface seulement est recouverte par une couverture.
Fig.2 représente une coupe transversale d'un rail avec le bourrelet introduit sous une aile du rail et des moyens de verrouillage de celui-ci (a) fixation réussie et (b) fixation inadéquate.
Fig.3 montre un premier exemple de patin d'enclenchement selon la présente invention.
Fig.4 montre une vue latérale d'un chariot comprenant des moyens de translation et des moyens d'enclenchement ainsi que de fixation selon la présente invention.
Fig.5 illustre en coupe transversale et en perspective le principe de fonctionnement des moyens d'enclenchement selon un premier exemple de la présente invention comprenant une poulie de renvoi.
Fig.6 illustre en coupe transversale et en perspective le principe de fonctionnement des moyens d'enclenchement selon un second exemple de la présente invention comprenant une poulie de renvoi plus compacte que le premier exemple de la Figure 5..
Fig.7 illustre le guidage d'un bourrelet d'une couverture par la portion inférieure d'un patin d'enclenchement selon la présente invention.
Fig.8 : montre un exemple de patin d'enclenchement selon la présente invention.
Fig.9 : montre un autre exemple de patin d'enclenchement selon la présente invention.
Fig.10 : montre un autre exemple de patin d'enclenchement selon la présente invention.
Fig.11 : montre un autre exemple de patin d'enclenchement selon la présente invention.
Fig.12 : montre un autre exemple de patin d'enclenchement selon la présente invention.
Fig.13 : montre un autre exemple de patin d'enclenchement selon la présente invention.
Fig.14 : montre (a) un patin selon l'exemple de la Fig.13 sans poulie ni palier et (b) une coupe de la poulie de renvoi et palier tenseur monté sur le patin de (a).
Fig.15 : illustre en vue de dessous le principe de fonctionnement des moyens d'enclenchement selon la présente invention.
Fig.16 illustre une variante préférée de l'invention dans laquelle le patin d'enclenchement comprend un insert de renfort pour renforcer la portion inférieure et, en particulier, le ressaut du patin d'enclenchement.

### DESCRIPTION DÉTAILLÉE DE MODES DE RÉALISATION PARTICULIERS

Tel que représenté à la Figure 1, le dispositif automatique de couverture (1) d'une surface (3) selon l'invention comprend une couverture (10) destinée à couvrir ladite surface (3). Le dispositif (1) permet de couvrir notamment des surfaces définies par le contour d'un bassin d'eau tel qu'une piscine, bassin de traitement d'eau, station d'épuration d'eaux usées, bassin de rétention, station de désalinisation etc. Cependant, l'invention pourra être mise en oeuvre dans tout domaine nécessitant la couverture d'une surface, comme par exemple un terrain de tennis en terre battue ou en gazon, une caisse de véhicule, une surface vitrée de serre, de fenêtre de véhicule tel que train ou bus, ou de jardin d'hiver, etc. D'une manière générale, on entend donc dans la présente demande par « surface » toute zone délimitée par un périmètre.

Le dispositif (1) comprend un tambour (2) qui présente une longueur au moins égale à la largeur de la couverture (10), celle-ci devant être de largeur et de longueur suffisantes pour couvrir toute la surface à protéger (3) lorsqu'elle est déployée. Le tambour (2) est monté sur un mécanisme de translation longitudinale comprenant des rails (6) placés de part et d'autre de ladite surface (3) et permettant de déplacer le tambour dans un premier sens (D1) de translation, permettant de déployer la couverture et un second sens (D2) de translation, permettant le retrait de la couverture. Lors de la translation longitudinale du tambour (2), celui-ci a deux sens de rotation : le premier sens de rotation (lors de la translation dans le premier sens) lui permettant de dérouler la couverture (10) pour la déployer et couvrir la surface à protéger (3), et le second sens de rotation (lors de la translation dans le second sens) lui permettant d'enrouler la couverture (10) afin de la retirer et de donner accès à ladite surface (3).

Le dispositif (1) comprend en outre de préférence un système de fixation situé à une extrémité transversale de la surface à couvrir et permettant le déroulement/enroulement de la couverture au-dessus de la surface à couvrir (3) lors de la translation et la rotation du tambour (2). Tout type de système de fixation connu et convenant aux critères de contraintes et de sécurité selon l'application peut être utilisé à cet effet. Par exemple, le système de fixation peut comprendre une pluralité de sangles solidaires de l'extrémité transversale apparente de la couverture (10), lesdites sangles étant par exemple munies de crochets d'ancrage qui se fixent sur la partie transversale du contour délimitant la surface à couvrir (3). De manière alternative, on peut munir l'extrémité à fixer de la couverture d'oeillets qui viennent se fixer au bord transversal de la surface par l'intermédiaire d'une série de pitons, de vis, d'un câble ou tout autre moyen. Ces moyens d'ancrage maintiennent immobilisée l'extrémité transversale apparente de la couverture (10) ce qui permet de générer sur celle-ci une traction longitudinale et de la dérouler sans devoir motoriser la rotation du tambour (2) lorsqu'il se déplace dans le premier sens (D1) pour couvrir la surface (3).

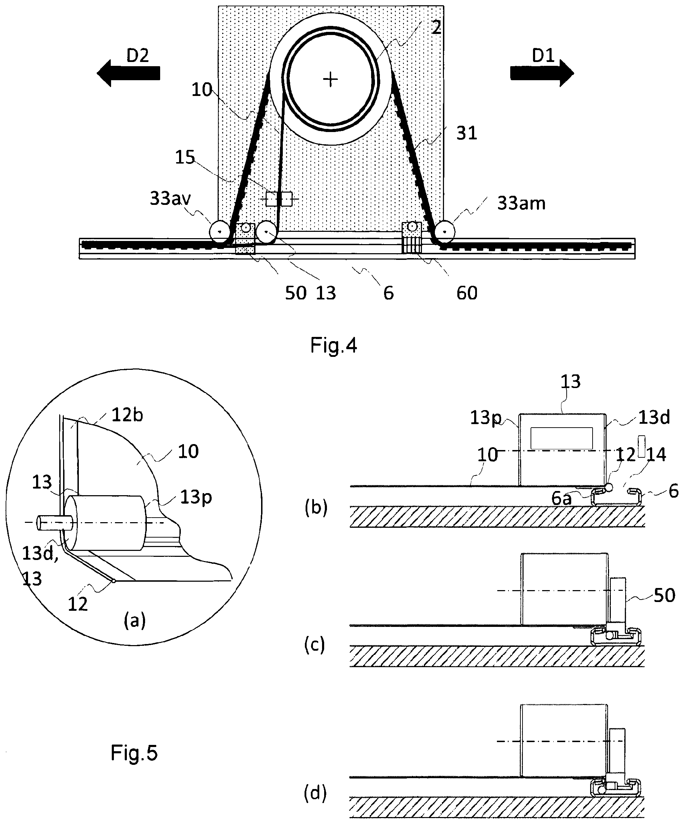

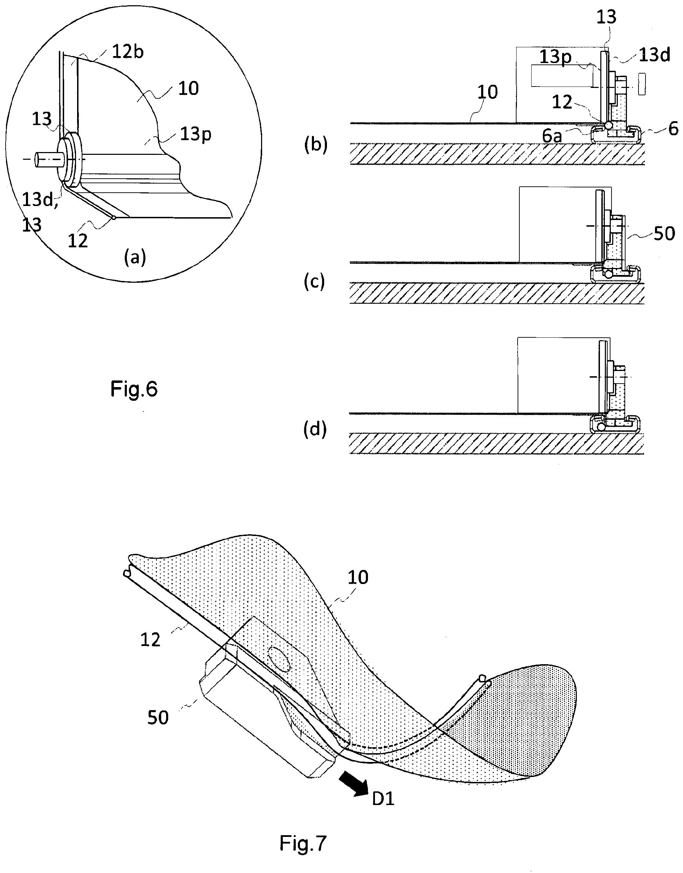

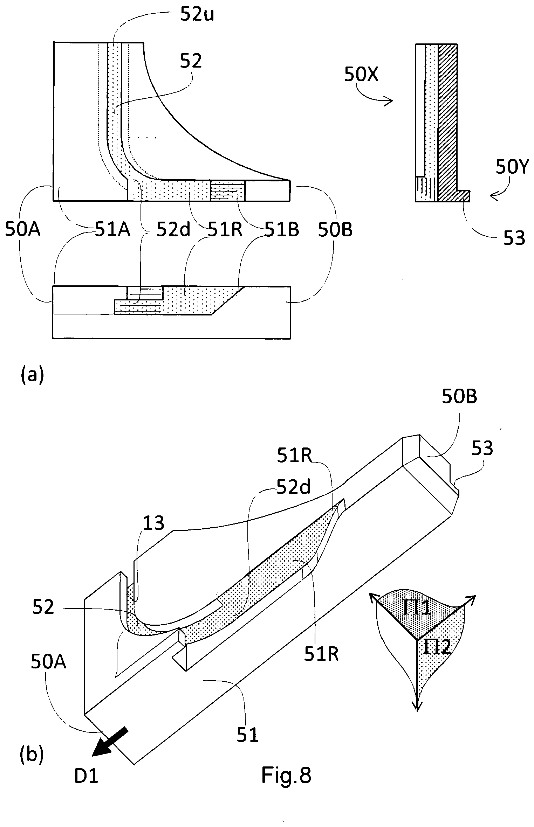

Les rails (6) placés de part et d'autre de ladite surface (3) sont constitués chacun d'un profilé ayant une ouverture (14) sur une de ses faces et orientée à l'opposé de la surface à couvrir. L'ouverture (14) est partiellement fermée par au moins une aile adjacente (6a) située du côté adjacent à la surface à couvrir. Le dispositif (1) objet de l'invention comprend des surfaces de renvoi (13) qui peuvent être formées par une surface intérieure d'une rainure (52) et/ou une surface d'une poulie de renvoi (13w) illustrées sur les Figures 8 à 14 et décrites plus en détails plus bas. Les surfaces de renvois (13) permettent de changer l'orientation de la couverture qui est présentée avec un angle entre le tambour et la surface à couvrir, afin de l'orienter parallèlement à la surface à couvrir et ainsi guider le bourrelet vers l'ouverture (14) du rail correspondant (cf. Figures 5(a) et 6(a)).

Le système de verrouillage continu du bourrelet (12) des bords longitudinaux de la couverture (10) dans l'ouverture (14) desdits rails (6), permet, une fois que le bourrelet (12) a été engagé dans l'ouverture (14), de le verrouiller en le coinçant sous l'aile adjacente (6a) du rail correspondant au fur et à mesure du déroulement de la couverture (10) (cf. Figures 2(a) et 4) et, lors de la translation du tambour dans le second sens (D2), de libérer le bourrelet en lui permettant de se désencleneher au fur et à mesuré de l'enroulement de la couverture. Le patin d'enclenchement (50) spécialement développé dans le cadre de la présente invention permet d'assurer qu'une fois le bourrelet présenté vis-à-vis de l'ouverture (14) du rail correspondant, le bourrelet soit systématiquement guidé dans l'ouverture et sous l'aile adjacente (6a).

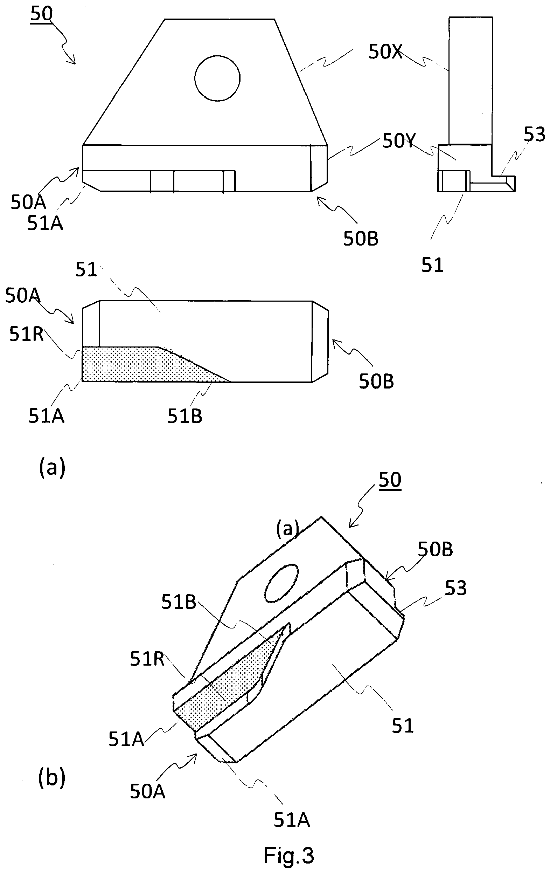

Un patin d'enclenchement (50) est inséré à glissement dans chaque rail, en aval des surfaces de renvois (13) dans le premier sens (D1) de translation tel qu'illustré à la Figure 4. Un exemple de patin d'enclenchement est illustré à la Figure 3 et comprend :
(a) une portion supérieure (50X), située hors des rails et fixée au mécanisme de translation de façon à se déplacer le long des rails avec le tambour, et
(b) une portion inférieure (50Y), insérée dans l'ouverture (14) du rail correspondant, comprenant une base inférieure (51) ayant une géométrie telle que le bourrelet soit guidé sous l'aile adjacente (6a) du rail correspondant.

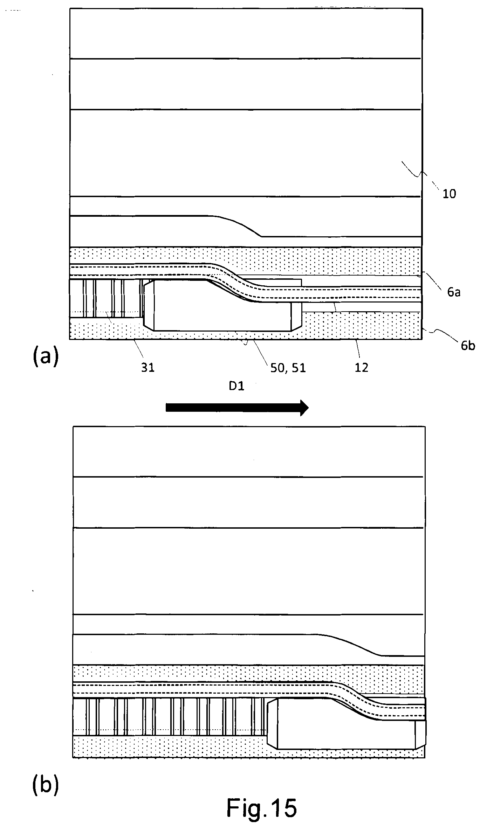

Telle qu'illustrée à la Figure 3, la base inférieure (51) du patin d'enclenchement (50) comprend de préférence une portion substantiellement plane de géométrie sensiblement rectangulaire à laquelle on a soustrait une portion définissant un évidement (51R) situé du côté adjacent à la surface à couvrir et ayant une largeur maximale et une hauteur permettant d'accommoder le bourrelet. L'évidement (51R) s'étend longitudinalement le long de la base inférieure, depuis son extrémité amont (51A) où l'évidement a sa largeur maximale et se referme progressivement avant d'atteindre son extrémité aval (51B) (les termes « *amont* » et *« aval »* étant utilisés ici par rapport au premier sens (D1) de déplacement du tambour). La Figure 7 montre le chemin imposé à un bourrelet de couverture par l'évidement (51R) d'un patin d'enclenchement (50) et la Figure 15 montre la base inférieure (51) d'un tel patin, inséré dans un rail (6) (zone ombrée) se déplaçant dans le premier sens (D1) de translation. Comme on peut le voir aux Figures 5(c)&(d), 6(c)&(d) et 15, le bourrelet (12) présenté vis-à-vis de l'ouverture (14) du rail est introduit dans ledit évidement qui le guide sous l'aile adjacente (6a) du rail. Grâce audit évidement (51R), le bourrelet n'a d'autre possibilité que de se placer correctement sous l'aile adjacente (6a) du rail, permettant ainsi au système de verrouillage (31) de se mettre en place convenablement, tel que représenté à la Figure 2(a) et d'ainsi fermement verrouiller le bourrelet (12), et donc le bord de la portion de couverture déployée, dans le rail (6). Afin de faciliter l'introduction du bourrelet dans l'évidement (51R) du patin d'enclenchement (50), la portion amont (51A) de la base inférieure (51) est préférablement biseautée comme illustrée à la Figure 3(a) (vue de profil).

Le système de verrouillage comprend un moyen de fermeture partielle de l'ouverture (14) du rail dans sa portion correspondant à la portion déployée de la couverture et en ne laissant plus qu'une ouverture résiduelle. La fermeture partielle doit être telle que, d'une part, elle permette à l'épaisseur de la couverture de passer dans l'ouverture résiduelle et, d'autre part, de ne pas permettre à l'épaisseur du bourrelet de passer à travers l'ouverture résiduelle et ainsi de verrouiller le bourrelet sous l'aile adjacente (6a) à l'intérieur du rail (6). Un tel moyen de fermeture partielle se présente de préférence sous forme d'une courroie flexible (31) de largeur légèrement inférieure à l'envergure de l'ouverture (14) et qui vient s'insérer dans l'ouverture du rail au fur et à mesure que le bourrelet (12) est guidé sous l'aile adjacente (6a). Ainsi,
- lors de la translation du tambour dans le premier sens (D1), la courroie (31) se dépose au fur et à mesure du déroulement de la couverture (10) dans l'ouverture (14) du rail correspondant une fois que le bourrelet (12) ait été engagé sous l'aile adjacente (6a) de ce dernier, l'y coinçant ainsi et,
- lors de la translation du tambour dans le second sens, la courroie (31) se retire de ladite ouverture (14), libérant ainsi le bourrelet et lui permettant de se désenclencher au fur et à mesure de l'enroulement de la couverture.

Une fois le bourrelet verrouillé sous l'aile adjacente (6a), le bord longitudinal de la couverture (10) est maintenu fermement même en cas de sollicitations mécaniques très élevées sur la couverture (10) dues par exemple à une dépression ou à la gravitation. Dans le cas des piscines, il confère la sécurité en cas d'accès (autorisé ou non) sur la couverture. La résistance du système de verrouillage peut facilement atteindre une plage de 5 à 10 kN/m (500 à 1000 kg/m) qui est suffisante pour de nombreuses applications. Selon les matériaux utilisés, de plus hautes résistances de verrouillage peuvent être atteintes.

Afin que le bourrelet se présente dans de bonnes conditions dans l'évidement (51R) du patin d'enclenchement, il est préférable de prévoir des moyens de guidages du bourrelet. Un premier moyen de guidage est assuré par des surfaces de renvoi (13) qui peuvent être formées par une surface intérieure d'une rainure et/ou en une surface d'appui d'une poulie de renvoi (13w). La surface de renvoi peut être comprise sur la portion supérieure (50X) du patin d'enclenchement, ou peut être séparée de celui-ci. Dans une variante préférée, la surface de renvoi (13) est partie intégrante de la portion supérieure du patin d'enclenchement. On obtient ainsi un assemblage fort compacte, comprenant moins de pièces mécaniques. Les surfaces de renvoi permettent de guider et positionner ledit bourrelet (12) de chaque bord de la couverture vers la portion inférieure (50Y) du patin d'enclenchement, vis-à-vis l'ouverture (14) du rail (6) correspondant lors de la translation dans le premier sens (D1) du tambour entraînant le déroulement de la couverture (cf. Figures 5&6).

Comme illustré à la Figure 8, la surface de renvoi (13) peut être au moins partiellement formée par une surface intérieure d'une rainure (52) disposée dans la portion supérieure (50X) du patin d'enclenchement (50), telle que.
- ladite rainure a une ouverture faciale s'étendant sur une surface parallèle au rail (6) correspondant et orientée vers la surface à couvrir,
- ladite ouverture a une largeur inférieure à la dimension du bourrelet (12) se trouvant à l'intérieur de la rainure et supérieure à l'épaisseur de la couverture (10) qui sort de la rainure par ladite ouverture, de sorte que la couverture peut glisser le long de la rainure mais le bourrelet ne peut en sortir par l'ouverture faciale, et
- ladite rainure comprend une section courbée permettant d'amener de manière tangentielle le bourrelet de la couverture (10) vers la portion inférieure (50Y) du patin d'enclenchement et ainsi sous l'aile adjacent (6a) du rail correspondant.

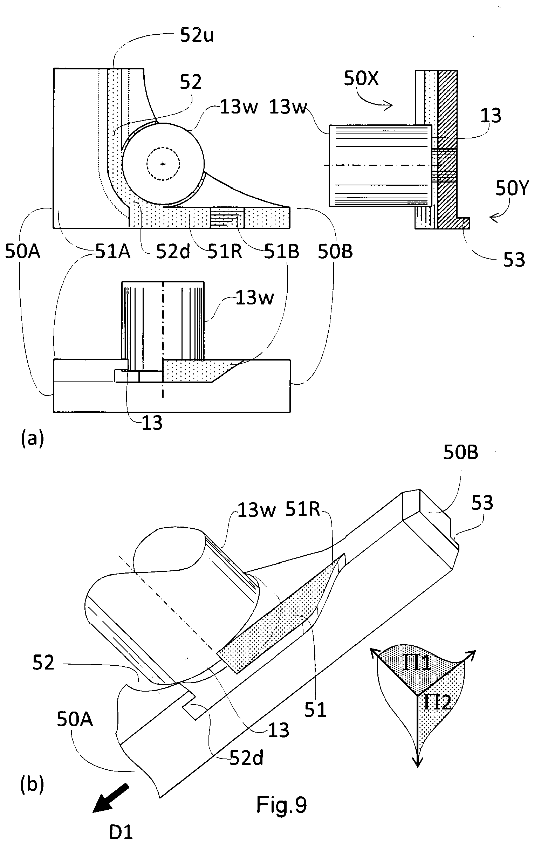

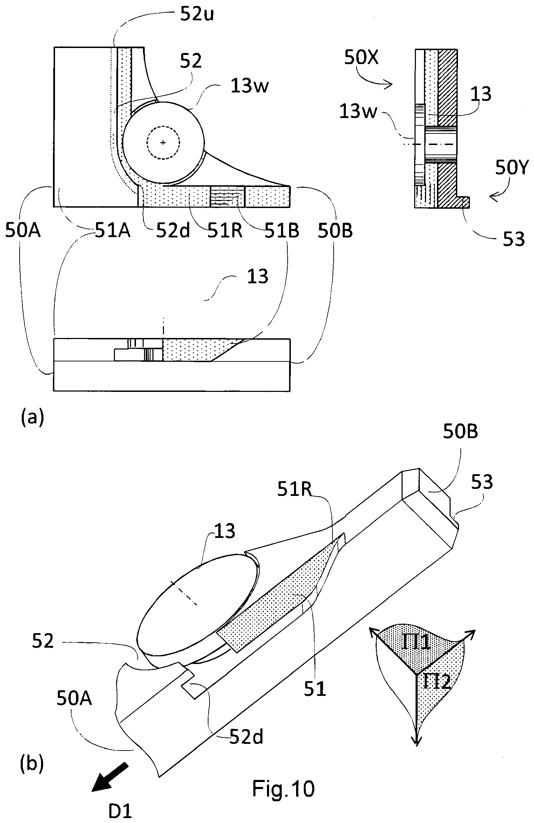

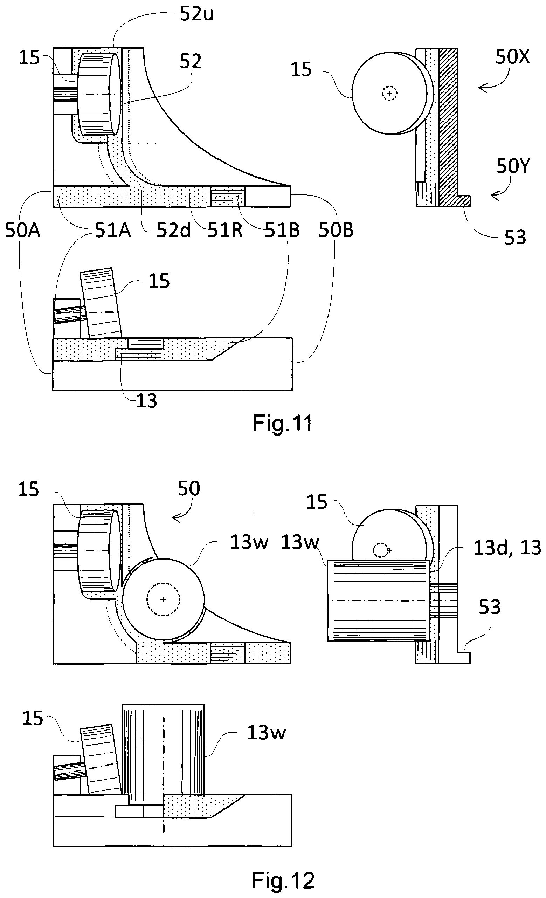

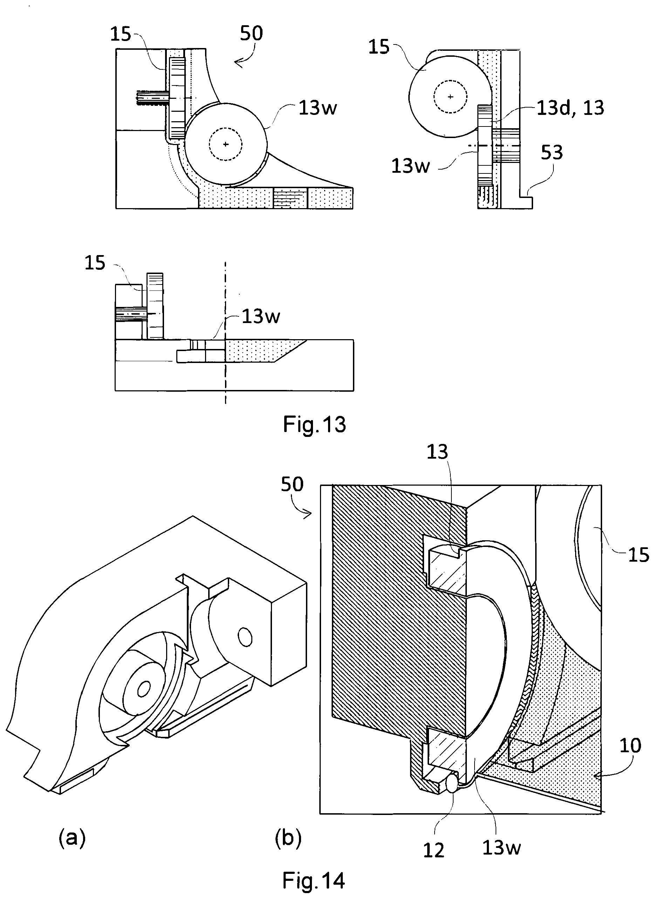

Dans une variante préférée, la portion supérieure du patin d'insertion comprend une poulie de renvoi (13w) sensiblement cylindrique montée à rotation selon un axe parallèle à la direction transverse de la couverture (cf. Figure 5(a), 6(a), 9, 10 et 12 à 14). Cette poulie de renvoi comprend une extrémité distale (13d), éloignée de la surface à couvrir, et une extrémité proximale (13p), adjacente à ladite surface à couvrir. La section courbée de la surface de renvoi décrite plus haut est alors formée au moins partiellement par l'extrémité distale (13d) de la poulie de renvoi contre laquelle s'appuie le bourrelet correspondant de la couverture qui enveloppe partiellement ladite poulie de renvoi afin de changer d'orientation. Plusieurs arrangement d'un patin d'enclenchement comprenant une poulie de renvoi sont représentés dans les Figures 9, 10, 12 à 14. Dans les Figures 9 et 12, une poulie de renvoi (13w) en forme de cylindre allongé est représentée. Une poulie allongée permet de mieux effectuer le changement de direction de la couverture. Cependant, des poulies de renvoi plus fines et moins invasives telles que représentées aux Figures 10, 13 et 14, sont également efficaces, surtout si la couverture est soumise à une tension transversale lors du verrouillage telle que discuté ci-dessous. L'important est que l'extrémité distale (13d) de la poulie (13w) offre une surface (13) de renvoi contre laquelle le bourrelet peut s'appuyer et être retenu. La Figure 14(b) illustre comment le bourrelet est coincé par une poulie de renvoi (13w) qui laisse passer l'épaisseur de la couverture, mais pas le bourrelet.

Dans une forme préférée, la couverture est soumise à une tension transversale lors de son déploiement, afin de garantir un aspect lisse, stable et esthétique. Afin d'insérer les bourrelets (12) dans les ouvertures des rails (6) en appliquant une telle tension transversale sur la couverture, celle-ci, enveloppe chaque surface de renvois (13), tel que le bourrelet (12) s'appuie sur une surface intérieure d'une rainure ou sur la surface de l'extrémité distale (13d) d'une poulie de renvoi (13w). Afin d'assurer un tel positionnement des bourrelets (12) par rapport aux surfaces de renvois (13), le système peut comprendre des paliers tenseurs (15) montés à rotation selon un axe de rotation transverse, de préférence normal aux bords transversaux de la couverture et qui guident les bourrelets de la couverture vers les surfaces de renvoi (13) du patin d'enclenchement correspondant. Chaque palier tenseur (15) peut être avantageusement placé entre la surface de renvoi (13) du patin d'enclenchement correspondant et le tambour, afin d'amener et de positionner le bourrelet de la couverture contre la surface de renvoi (13). De manière préférée, un palier tenseur est monté directement sur chaque patin d'enclenchement (50),

Le patin d'enclenchement de la Figure 11 comprend un palier tenseur (15) monté à rotation sur un axe transverse mais pas normal aux bords transversaux de la couverture et est apte à appliquer une tension transversale sur la couverture et à guider un bourrelet de celle-ci dans la rainure (13) du patin dont une surface interne forme la surface de renvoi. A partir du moment où un bourrelet de la couverture contacte le palier tenseur jusqu'à son enclenchement et verrouillage dans le rail, la couverture est maintenue sous tension transversale, ce qui donne un aspect lisse à la partie de couverture déjà déployée en aval du tambour.

La Figure 12 montre un patin d'enclenchement semblable à celui de la Figure 11 discuté supra, comprenant un palier tenseur (15) et dont la partie courbe de la rainure est formée par une poulie de renvoi (13w) montée à rotation sur un axe parallèle aux bords transversaux de la couverture. Les Figures 13 et 14 illustrent un autre exemple de patin d'enclenchement comprenant une rainure, une poulie de renvoi (13w) et un palier tenseur (15) monté sur un axe normal à l'axe de la poulie de renvoi. La Figure 14(a) montre un exemple de patin, sans poulie ni palier, qui est très compact et avantageux. La Figure 14(b) montre une coupe d'un patin selon la Figure 14(a) montrant une poulie de renvoi (13w) comprenant un rebord dont une ou plusieurs faces intérieures forment la surface de renvoi (13). Alors que dans les Figures 11 et 12 le palier tenseur est monté à rotation sur un axe transverse, mais pas normal aux bords transversaux de la couverture, dans l'exemple de la Figure 14, l'axe de rotation du palier tenseur (15) est normal à l'axe de la poulie de renvoi (13w) et aux bords transversaux de la couverture. Les paliers tenseurs (15) guident les bourrelets correspondants vers les surfaces de renvoi en appliquant, si nécessaire, une tension transversale sur la couverture. Les surfaces de renvoi (13) guident les bourrelets correspondants vers la portion inférieure (50Y) des patins d'enclenchement dont la géométrie guide les bourrelets sous l'aile adjacente (6a) comme illustré aux Figures 7 et 15. Ceci évite le danger illustré à la Figure 2(b) que le bourrelet soit mal ou pas introduit sous l'aile adjacente (6a) d'un rail.

Dans certains cas, il n'est pas désirable d'appliquer une tension transversale à la couverture. Par exemple, dans le cas de couvertures flottantes recouvrant une piscine, aucune tension transversale n'est appliquée sur la couverture. De même, dans le cas où la couverture comprendrait une fenêtre ou ouverture, dépourvue de matière, aucune tension transversale ne pourrait être appliquée sur cette portion de la couverture. Dans de tels cas, il suffit de ne pas utiliser de paliers tenseurs (15) ou alors de les placer à une distance inférieure ou égale à la largeur de la couverture. Même si aucune tension transversale ne doit être appliquée sur la couverture, les surfaces de renvoi demeurent essentielles au guidage des deux bourrelets vers l'intérieur du rail. Il suffit simplement de les séparer l'une de l'autre d'une distance supérieure à la largeur de la couverture, pour qu'elles n'appliquent pas de tension transversale à la couverture autre que son propre poids.

Dans une variante particulièrement préférée de la présente invention, outre leur fonction de verrouillage continu du bourrelet (12), les courroies (31) participent également à la translation du tambour (2) qui est de préférence monté à rotation sur un chariot (21) monté sur les rails (6) et surplombant transversalement la surface (3) à couvrir. Dans une telle variante, telle que représentée aux Figures 1 et 3, ledit chariot comprend à chacune de ses extrémités,
(a) une roue d'entraînement (9) dont l'axe de rotation est parallèle à celui dudit tambour (2);
(b) au moins une première roulette aval (33av) et au moins une seconde roulette amont (33am) reposant sur les rails (6) et permettant la translation longitudinale du chariot (21), et étant montées la première en aval et la seconde en amont de la roue d'entraînement (9) dans le premier sens (D1) de déplacement, et constituant avec celle-ci un triangle dont la roue d'entraînement (9) forme le sommet supérieur (ou le plus distant de la surface à couvrir).

Chacune des deux courroies flexibles (31) est fixée uniquement à chacune de ses extrémités (35) aux quatre coins de la surface à couvrir et s'étend le long de chacun des bords longitudinaux de la surface à couvrir de la manière suivante :
(c) Chaque courroie (31) coiffe sans glissement la roue d'entraînement (9) dans la section centrale (31b) comprise entre les deux roulettes (33av, 33am) et
(d) Chaque courroie est disposée dans l'ouverture (14) des rails (6) dans les sections latérales (31a) comprises entre un point de fixation (35) et la roulette (33av, 33am) la plus proche dudit point de fixation.

Afin d'éviter tout glissement entre les courroies (31) et les roues d'entraînement (9), la surface de chaque courroie entrant en contact avec la roue d'entraînement comprend de préférence un crénelage qui s'engage dans un crénelage correspondant sur la roue d'entraînement. Alternativement, les courroies peuvent être sous forme de chaînes, ou avoir une face rugueuse permettant d'éviter tout glissement avec la roue d'entraînement (9). Des systèmes de translation et verrouillage du type présenté ci-dessus sont décrits par exemple dans WO2010010152, WO2010054960, et demande de brevet belge BE2012/0725.

Dans la section latérale (31a) en aval du chariot dans le premier sens (D1) de translation (i.e., définie entre un point de fixation (35) et la roulette avale (33av) du chariot), la courroie (35) agit également comme système de verrouillage du bourrelet, tel que discuté plus haut. Le patin d'enclenchement (50) est alors situé entre ladite roulette aval (33av) et la poulie de renvois (13) correspondantes tel que représenté à la Figure 4.

Bien qu'un profil en G pour les rails (6) comprenant une aile uniquement sur un coté de l'ouverture (14), soit suffisante pour permettre un verrouillage du bourrelet (12) selon la présente invention, un profil en C est préféré, comprenant outre l'aile adjacente (6a) une deuxième aille distale (6b) séparée de la surface à couvrir par l'ouverture (14) et l'aile adjacente (6a) et fermant partiellement le côté opposé de l'ouverture (14) laissée par l'aile adjacente (6a). Un tel profil permet de mieux solidariser le mécanisme de translation aux rails en prévoyant que chaque patin d'enclenchement (50) comprenne un ressaut (53) en saillie s'étendant sous l'aile distale (6b) du rail correspondant. Ce ressaut empêche ledit patin d'enclenchement (50) et donc ledit mécanisme de translation longitudinale auquel il est fixé, de sortir de l'ouverture du rail correspondant. Le ressaut (53) peut également être glissé sous l'aile adjacente (6a) mais le patin sera plus stable si le ressaut est glissé sous l'aile distale, puisque la couverture soumet la portion supérieure (50X) des patins à des forces orientées vers la surface à couvrir et tendent à faire pivoter les patins vers la couverture.

Le ressaut (53) et sa connection au patin sont soumis à de fortes contraintes lors de son utilisation. Ils sont soumis d'une part à d'importantes forces de friction contre les ailes du rail lors de sa translation. Pour réduire les frictions lors de la translation du patin le long du rail correspondant, il est préférable que les parties du patin et du ressaut contactant une surface du rail soient réalisées en un matériau ayant un coefficient de friction bas. Par exemple, un polymère peut être utilisé, tel que le polyéthylène (PE), polypropylène (PP), polyamide (PA), polyoxyméthylène (POM), un polymère fluoré, tel que le polytétrafluoroéthylène (Téflon®, PTFE), ou semblables.

D'autre part, le ressaut est soumis à de fortes contraintes en flexion, causées, en particulier, par la tension appliquée à la couverture lors de l'enclenchement du bourrelet correspondant de la couverture. Il a été constaté que dans certains cas, en particulier pour des couvertures de grandes dimensions surplombant une cavité, les tensions sur la couverture sont telles qu'on a observé la rupture de ressauts de certains patins faits en polymères tels que décrits plus haut.

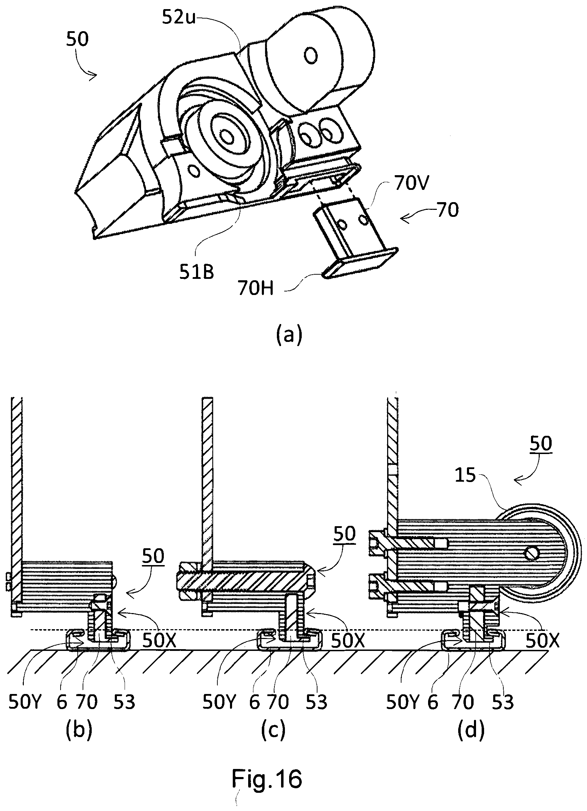

Afin de réduire les frictions lors de la translation d'un patin le long d'un rail et, en même temps, garantir l'intégrité du patin à long terme, dans une variante préférée de la présente invention, le patin d'enclenchement comprend une structure en polymère et un insert de renfort (70) en métal ou en matériau composite renforcé de fibres pour rigidifier localement le patin d'enclenchement. En particulier, tel que représenté à la Figure 16, l'insert de renfort peut avoir une forme en L, (ou en T inversé), avec une première portion horizontale (70H), renforçant le ressaut (53) et une portion verticale (70V), normale à la portion horizontale et s'étendant de la portion inférieure (50Y) à la portion supérieure (50X) du patin d'enclenchement. A cet effet, la structure en polymère peut comprendre d'une part, une cavité dans laquelle vient s'insérer la portion verticale de l'insert de renfort et, d'autre part, un renfoncement dans une partie inférieure du ressaut, afin que toutes les surfaces du patin d'enclenchement en contact avec le rail soient en polymère. L'insert de renfort peut être en acier, de préférence en acier inoxidable, ou en aluminium ou alliage d'aluminium. De manière alternative, l'insert peut être réalisé en matériau composite renforcé de fibres longues ou continues et de matrice de préférence organique, telle que des résines thermodurcies, telles que époxy, polyester, etc. ou des polymères thermoplastiques tels que polyamide, polyester, polyuréthane, etc.

La Figure 16 illustre plusieurs exemples de patins d'enclenchement comprenant un insert de renfort (70). La Figure 16(a) représente une vue en perspective montrant l'insertion d'un insert de renfort (70) dans une cavité pourvue dans la structure en polymère du patin d'enclenchement. Comme on le voit dans les coupes des Figures 16(b)&(d) l'insert de renfort (70) peut être maintenu en position dans la cavité par tout moyen de fixation connu de l'homme du métier, comme des vis, moyens d'encliquetage (snap fastening), ou autres. Un insert de renfort peut être utilisé pour toute variante de patin d'enclenchement, des plus simples tels qu'illustrés à la Figure 16(b)&(c), aux plus complexes tel que représenté à la Figure 16(d) comprenant un palier tenseur (15). Dans la variante de la Figure 16(c) le patin d'enclenchement comprend un second insert de renfort rigidifiant la portion supérieure (50X) du patin d'enclenchement.

Comme illustré à la Figure 4, afin de mieux encore solidariser le chariot (21) aux rails, le dispositif comprend de préférence un patin de fixation (60) inséré à glissement dans chaque rail, en aval de la roulette amont (33am) et en amont du patin d'enclenchement (50) dans le premier sens (D1) de translation. Un tel patin de fixation (60) est semblable au patin d'enclenchement (50) mais dépourvu d'un évidement (51R) inutile puisque le patin de fixation (60) n'entre à aucun moment en contact ni avec la couverture (10), ni avec le bourrelet (12). Le patin de fixation comprend donc :
(a) une portion supérieure, située hors des rails et fixée au mécanisme de translation de façon à se déplacer le long des rails avec le tambour, et
(b) une portion inférieure, insérée dans l'ouverture (14) du rail correspondant, ladite portion inférieure comprenant un ressaut en saillie s'étendant sous l'aile distale (6b) du rail correspondant et empêchant ledit patin de fixation (60) et donc ledit mécanisme de translation longitudinale auquel il est fixé de sortir de l'ouverture du rail correspondant, en assistant ainsi le patin d'enclenchement (50) dans cette tâche.

Un dispositif selon la présente invention permet de préférence les opérations suivantes illustrées à la Figure 4:
(a) lors du déroulement de la couverture (= déploiement de la couverture), le bourrelet (12) de chaque bord longitudinal de la couverture est guidé et maintenu en vis-à-vis de l'ouverture (14) du rail (6) correspondant au fur et à mesure que le chariot avance dans le premier sens (D1), grâce à l'action des surfaces de renvoi (13) et optionnellement de paliers tenseurs (15) ;
(b) Le bourrelet interagit alors avec le patin d'enclenchement (50) qui le force dans l'ouverture (14) du rail et, à l'aide de l'évidement (51R), le guide sous l'aile adjacente (6a) dudit rail, où
(c) le bourrelet y est bloqué par l'insertion immédiatement après dans la même ouverture de la section latérale (31a) de courroie directement adjacente à la roulette aval (33av) en aval du premier sens (D1) de translation du chariot.et
(d) lors du ré-enroulement de la couverture (= retrait de la couverture), la section centrale de courroie (31b) directement adjacente à la roulette aval (33av) en amont du sens de translation du chariot dans le second sens (D2) est retirée de ladite ouverture (14) du rail, permettant ainsi au bourrelet (12) de se dégager du rail et rendant possible le ré-enroulement de la couverture sur le tambour (2) du chariot.

Le déplacement du tambour le long d'une surface à couvrir ou découvrir se produit généralement à une vitesse sensiblement constante. Les roues d'entraînement (9) doivent donc tourner à une vitesse de rotation sensiblement constante. Cependant, surtout pour des surfaces de dimensions longitudinales importantes, les diamètres extérieurs du tambour lorsque la couverture est déployée ou retirée peuvent varier considérablement. Comme la vitesse de déploiement/retrait de la couverture dépend de la vitesse de rotation des roues d'entraînement (qui demeure généralement constante) et comme le diamètre extérieur du tambour varie avec la portion de couverture qui y est enroulée, il s'en suit que le tambour et les roues d'entraînement (9) ne peuvent tourner à la même vitesse tout au long de la translation du tambour. Pour des couvertures de petites dimensions, il est parfois possible de compenser les différences de vitesse par une traction sur la couverture. Pour des couvertures de dimensions longitudinales plus importantes, comme pour une piscine ou une remorque d'un semi-remorque, il est nécessaire de prévoir des moyens de modification de la vitesse relative de rotation entre le tambour d'enroulement/déroulement de la couverture et l'axe de rotation des roues d'entraînement (9). Ces moyens peuvent inclure un ressort spiralé placé à l'intérieur du tambour (2) permettant de compenser la différence entre la vitesse de rotation des roues d'entraînement, qui doit rester sensiblement constante, et la vitesse de rotation du tambour, qui varie avec le diamètre extérieur du tambour au fur et à mesure que la couverture est enroulée/déroulée. Lors du déploiement de la couverture, le tambour tourne spontanément dû à la tension créée par la couverture qui est fixée à un bord transversal de la surface à couvrir. Si le ressort spiralé se tend pendant le déploiement de la couverture (10) sur la surface, il n'est pas nécessaire de motoriser la rotation du tambour non plus lors du ramassage et ré-enroulement de la couverture autour du tambour, dont la rotation est conduite par la détente du ressort spiralé. Ce système est très avantageux car il ne nécessite pas de deuxième moteur ou d'un système d'engrenages ou de contrôle électronique pour tourner le tambour à la vitesse adéquate.

Une tension longitudinale peut être appliquée à la couverture lors de son déploiement simplement en s'assurant que la vitesse de déroulement de la couverture par la rotation du tambour soit inférieure à la vitesse de translation longitudinale du tambour, soit par l'intermédiaire d'un frein ou d'un ressort dans le système de rotation du tambour tel que discuté supra, soit par un contrôle motorisé différencié des mouvements de rotation et translation du tambour. Si ces deux vitesses sont synchrones, la couverture sera déployée sans d'autres tensions que celles générées par son poids propre dans le cas de la couverture d'une surface comprenant une cavité telle qu'une piscine.

La couverture peut être en toute matière convenant à l'application en question : matériaux textiles synthétiques ou naturels, films polymériques, lattes en polymère, en métal ou en bois, etc. Elle peut être transparente, opaque ou translucide et peut former une barrière à des fluides ou au contraire être poreuse, voir même comprendre des mailles telles que dans un filet. Par exemple, pour des applications de piscines ou de bassins de traitement d'eau ou similaire, il est avantageux si la couverture comprend des trous de drainage permettant ainsi à l'eau de pluie de ne pas s'accumuler sur la couverture et évitant ainsi la formation de poches d'eau sur la surface de la couverture.

Un système de couverture selon la présente invention est particulièrement adapté au recouvrement de surfaces telles que :
(a) un bassin rempli ou non d'un liquide tel qu'une piscine, un bassin de rétention, de traitement ou de désalinisation des eaux ;
(b) un terrain de sports, tel un terrain de tennis ou de cricket ;
(c) une caisse de véhicule, telle une remorque,
(d) une surface vitrée telle une serre, un jardin d'hiver ou une fenêtre de véhicule.

Grâce au patin d'enclenchement (50) de la présente invention, le bourrelet (12) pourvu le long des bords longitudinaux d'une couverture (10) est systématiquement placé convenablement sous l'aile adjacente (6a) du rail dans lequel il doit être verrouillé, tel qu'illustré à la Figure 2(a) et une situation telle que représentée à la Figure 2(b) est évitée, même en l'absence d'une tension latérale de la couverture lors de son insertion dans le rail. La sécurité du dispositif est ainsi garantie même après de nombreux cycles de déploiements et retraits de la couverture au-dessus d'une surface à couvrir.

## Revendications

1. Dispositif (1) de couverture d'une surface (3) comprenant :
(a) Une couverture (10) sensiblement rectangulaire ayant deux bords longitudinaux opposés l'un à l'autre et deux bords transversaux opposés l'un à l'autre, chaque bord longitudinal étant muni d'un bourrelet (12) en saillie, s'étendant le long dudit bord,
(b) un tambour (2) monté à rotation apte à enrouler et dérouler la couverture (10), ledit tambour (2) étant monté sur un mécanisme de translation longitudinale le long de rails (6) placés de part et d'autre de ladite surface (3) et constitués chacun d'un profilé ayant une ouverture (14) sur une de ses faces et orientée à l'opposé de la surface à couvrir, ladite face comprenant au moins une aile adjacente (6a) située du côté adjacent à la surface à couvrir et fermant partiellement ladite ouverture (14), ledit mécanisme de translation permettant la translation longitudinale du tambour dans un premier sens entraînant le déroulement de la couverture et son déploiement au-dessus de la surface à couvrir (3) et dans un second sens entraînant l'enroulement de la couverture et son retrait de ladite surface (3),
(c) une surface de renvoi (13) pourvue de chaque côté de la surface à couvrir permettant de guider et positionner ledit bourrelet (12) de chaque bord de la couverture vis-à-vis l'ouverture (14) du rail (6) correspondant lors de la translation dans le premier sens du tambour entraînant le déroulement de la couverture,
(d) un système de verrouillage continu du bourrelet (12) des bords longitudinaux de la couverture (10) dans l'ouverture (14) desdits rails (6), permettant, une fois que le bourrelet (12) ait été engagé dans l'ouverture (14), de le verrouiller en le coinçant sous l'aile adjacente (6a) du rail correspondant au fur et à mesure du déroulement de la couverture (10) et, lors de la translation du tambour dans le second sens, de libérer le bourrelet en lui permettant de se désenclencher au fur et à mesure de l'enroulement de la couverture,
**caractérisé en ce que** le dispositif comprend de plus un patin d'enclenchement (50) du bourrelet, inséré à glissement dans chaque rail, en aval des surfaces de renvois (13) dans le premier sens de translation, ledit patin d'enclenchement comprenant :
(e) une portion supérieure (50X), située hors des rails et fixée au mécanisme de translation de façon à se déplacer le long des rails avec le tambour, et
(f) une portion inférieure (50Y), insérée dans l'ouverture (14) du rail correspondant, comprenant une base inférieure (51) dont la géométrie est telle que le bourrelet soit guidé sous l'aile adjacente (6a).

2. Dispositif selon la revendication 1, dans lequel le système de verrouillage comprend de plus deux courroies flexibles (31), chacune étant apte,
• lors de la translation du tambour dans le premier sens, à se déposer au fur et à mesure du déroulement de la couverture (10) dans l'ouverture (14) du rail correspondant une fois que le bourrelet (12) ait été engagé sous l'aile adjacente (6a) de ce dernier et ainsi de l'y coincer et,
• lors de la translation du tambour dans le second sens, à se retirer de ladite ouverture (14), libérant ainsi le bourrelet et lui permettant de se désenclencher au fur et à mesure de l'enroulement de la couverture.

3. Dispositif selon la revendication 2, dans lequel le mécanisme de translation comprend un chariot (21) monté sur les rails (6) et surplombant transversalement la surface (3) à couvrir et supportant le tambour (2) comprenant à chacune de ses extrémités:
• une roue d'entraînement (9) dont l'axe de rotation est parallèle à celui dudit tambour (2);
• au moins une première roulette aval (33av) et au moins une seconde roulette amont (33am) reposant sur les rails (6) et permettant la translation longitudinale du chariot (21), et étant montées la première en aval et la seconde en amont de la roue d'entraînement (9) dans le premier sens de déplacement, et constituant avec celle-ci un triangle dont la roue d'entraînement (9) forme un sommet supérieur;
et dans lequel les deux courroies flexibles (31) sont fixées uniquement à chacune de leurs extrémités (35) aux quatre coins de la surface à couvrir et s'étendent le long des bords longitudinaux de la surface à couvrir de la manière suivante :
• elles sont disposées dans l'ouverture (14) des rails (6) dans les sections latérales (31a) comprises entre un point de fixation (35) et la roulette (33av, 33am) la plus proche dudit point de fixation, et
• elles coiffent sans glissement la roue d'entraînement (9) dans la section centrale (31b) comprise entre les deux roulettes (33av, 33am).

4. Dispositif selon la revendication 3, dans lequel chaque courroie flexible (31) coiffe la roulette aval (33av) qui la dépose dans l'ouverture du rail (6) correspondant et dans lequel le patin d'enclenchement (50) est situé entre ladite roulette aval (33av) et la surface_de renvoi (13) correspondantes.

5. Dispositif selon une quelconque des revendications précédentes, dans lequel la base inférieure (51) du patin d'enclenchement (50) comprend une portion substantiellement plane de géométrie sensiblement rectangulaire à laquelle on a soustrait une portion définissant un évidement (51R) situé du côté adjacent à la surface à couvrir et ayant une largeur maximale et une hauteur permettant d'accommoder le bourrelet, ledit évidement (51R) s'étendant longitudinalement le long de la base inférieure depuis son extrémité amont (51A) où l'évidement a sa largeur maximale et se referme progressivement avant d'atteindre son extrémité avale (51B), ledit évidement permettant de guider le bourrelet sous l'aile adjacente (6a) du rail.

6. Dispositif de couverture selon la revendication précédente, dans lequel la portion amont (51A) de la base inférieure (51) est biseautée afin de faciliter l'insertion du bourrelet (12) dans l'évidement (51R) du patin d'enclenchement (50).

7. Dispositif de couverture selon l'une quelconque des revendications précédentes dans lequel le rail est un profilé en forme de C, comprenant outre l'aile adjacente (6a) une deuxième aille distale (6b) séparée de la surface à couvrir par l'ouverture (14) et l'aile adjacente (6a) et fermant partiellement le côté opposé de l'ouverture (14) fermé par l'aile adjacente (6a) et dans lequel chaque patin d'enclenchement (50) comprend un ressaut (53) en saillie s'étendant sous l'aile distale (6b) ou sous l'aile adjacente (6a) du rail correspondant et empêchant ledit patin d'enclenchement (50) et donc ledit mécanisme de translation longitudinale auquel il est fixé, de sortir de l'ouverture du rail correspondant.

8. Dispositif de couverture selon la revendication 7, comprenant un patin de fixation (60) inséré à glissement dans chaque rail et situé entre la surface_de renvois (13) de la roulette amont (33am) correspondantes, ledit patin de fixation comprenant :
• une portion supérieure, située hors des rails et fixée au mécanisme de translation de façon à se déplacer le long des rails avec le tambour, et
• une portion inférieure, insérée dans l'ouverture (14) du rail correspondant, ladite portion inférieure comprenant un ressaut en saillie s'étendant sous l'aile distale (6b) du rail correspondant et empêchant ledit patin de fixation (60) et donc d'assister le patin d'enclenchement (50) à empêcher ledit mécanisme de translation longitudinale auquel il est fixé de sortir de l'ouverture du rail correspondant.

9. Dispositif de couverture selon l'une quelconque des revendications précédentes dans lequel la surface de renvoi (13) est au moins partiellement formée d'une surface intérieure d'une rainure (52) disposée dans la portion supérieure (50X) du patin d'enclenchement (50):
• ladite rainure ayant une ouverture faciale s'étendant sur une surface parallèle au rail (6) correspondant et orientée vers la surface à couvrir,
• ladite ouverture ayant une largeur inférieure à la dimension du bourrelet (12) se trouvant à l'intérieur de la rainure et supérieure à l'épaisseur de la couverture (10) qui sort de la rainure par ladite ouverture, de sorte que la couverture peut glisser le long de la rainure mais le bourrelet ne peut en sortir par l'ouverture faciale, et
• ladite rainure comprend une section courbée permettant d'amener de manière tangentielle le bourrelet de la couverture (10) vers la portion inférieure (50Y) du patin d'enclenchement et ainsi sous l'aile adjacent (6a) du rail correspondant.

10. Dispositif de couverture selon la revendication 9, dans lequel la portion supérieure du patin d'insertion comprend une poulie de renvoi (13w) sensiblement cylindrique montée à rotation selon un axe parallèle à la direction transverse de la couverture, ladite poulie de renvoi ayant une extrémité distale (13d), éloignée de la surface à couvrir, et une extrémité proximale (13p), adjacente à ladite surface, et dans lequel la section courbée est formée au moins partiellement par l'extrémité distale (13d) de la poulie de renvoi contre laquelle s'appuie le bourrelet correspondant de la couverture qui enveloppe partiellement ladite poulie de renvois (13) afin de changer d'orientation.

11. Dispositif de couverture selon la revendication 10, dans lequel l'extrémité distale (13d) de chaque poulie de renvoi (13w) situé de part et d'autre de la surface à couvrir s'appuie sur le bourrelet (12) correspondant, appliquant ainsi une contrainte en traction sur la couverture dans la direction transversale lors de son déroulement, ladite contrainte étant maintenue lors du verrouillage de la couverture (10) dans les rails (6).

12. Dispositif de couverture selon l'une quelconque des revendications 9 à 11, comprenant de plus un palier tenseur (15) monté à rotation sur chaque patin d'enclenchement (50), selon un axe de rotation transverse, de préférence normal aux bords transversaux de la couverture et qui guide le bourrelet de la couverture dans la rainure (13) du patin d'enclenchement correspondant.

13. Dispositif de couverture selon l'une quelconque des revendications 7 à 12, dans lequel le patin d'enclenchement comprend une structure en polymère et un insert de renfort (70) en métal ou en matériau composite renforcé de fibres pour rigidifier localement le patin d'enclenchement et, de préférence,
• l'insert de renfort a une forme en L, ou en T inversé, avec une première portion horizontale (70H), renforçant le ressaut (53) et une portion verticale (70V), normale à la portion horizontale et s'étendant de la portion inférieure (50Y) à la portion supérieure (50X) du patin d'enclenchement, et
• la structure en polymère comprend d'une part, une cavité dans laquelle vient s'insérer la portion verticale de l'insert de renfort et, d'autre part, un renfoncement dans une partie inférieure du ressaut, afin que toutes les surfaces du patin d'enclenchement en contact avec le rail soient des surfaces de la structure en polymère.

14. Utilisation d'un dispositif selon l'une quelconque des revendications précédentes pour couvrir une surface (3) sélectionnée parmi :
(a) un bassin rempli ou non d'un liquide tel qu'une piscine, un bassin de rétention, de traitement ou de désalinisation des eaux ;
(b) un terrain de sports, tel un terrain de tennis ou de cricket ;
(c) une caisse de véhicule,
(d) une surface vitrée telle une serre, un jardin d'hiver ou une fenêtre de véhicule.

15. Procédé pour couvrir une surface (3) par une couverture (10) utilisant un dispositif de couverture selon une quelconque des revendications 3 à 13 dans lequel :
(a) le chariot se trouve à une extrémité de la surface à couvrir, avec un bord transversal de la couverture étant fixé à cette extrémité de la surface et le reste de la couverture étant enroulé autour du tambour,
(b) avancer le chariot dans le premier sens au-dessus de la surface à couvrir le long des rails (6), et ainsi dérouler du tambour la couverture qui se déploie sur la portion de surface en aval du tambour et, en même temps, guider et maintenir le bourrelet (12) de chaque bord longitudinal de la couverture vis-à-vis de l'ouverture (14) du rail (6) correspondant au fur et à mesure que le tambour avance,
(c) par l'intermédiaire du patin d'enclenchement, forcer le bourrelet dans l'ouverture (14) du rail et le guider sous l'aile adjacente (6a) dudit rail, où
(d) le bourrelet y est bloqué par l'insertion immédiatement après dans la même ouverture de la section latérale (31a) de courroie directement adjacente à la roulette aval (33av) en aval du sens de translation du chariot.

## Patentansprüche

1. Vorrichtung (1) zur Abdeckung einer Oberfläche (3), umfassend:
(a) eine im Wesentlichen rechteckige Abdeckung (10), die zwei einander gegenüberliegende Längsränder und zwei einander gegenüberliegende Querränder aufweist, wobei jeder Längsrand mit einem vorstehenden Wulst (12) versehen ist, der sich entlang des Randes erstreckt,
(b) eine Trommel (2), die drehbar gelagert und geeignet ist, die Abdeckung (10) aufzuwickeln und abzuwickeln, wobei die Trommel (2) auf einem Mechanismus zur Längstranslation entlang von Schienen (6) angebracht ist, die beiderseits der Oberfläche (3) angeordnet sind und jeweils von einem Profil gebildet werden, das eine Öffnung (14) auf einer seiner Seiten aufweist, die zu der abzudeckenden Oberfläche entgegengesetzt ausgerichtet ist, wobei diese Seite wenigstens einen benachbarten Flügel (6a) umfasst, der sich auf der Seite befindet, die der abzudeckenden Oberfläche benachbart ist, und die Öffnung (14) teilweise verschließt, wobei der Translationsmechanismus die Längstranslation der Trommel in einer ersten Richtung ermöglicht, die das Abwickeln der Abdeckung und ihre Ausbreitung über der abzudeckenden Oberfläche (3) zur Folge hat, und in einer zweiten Richtung, die das Aufwickeln der Abdeckung und ihr Zurückziehen von der Oberfläche (3) zur Folge hat,
(c) eine auf jeder Seite der abzudeckenden Oberfläche vorgesehene Umlenkfläche (13), die es ermöglicht, bei der Translation der Trommel in der ersten Richtung, die das Abwickeln der Abdeckung zur Folge hat, den Wulst (12) jedes Randes der Abdeckung zu führen und gegenüber der Öffnung (14) der entsprechenden Schiene (6) zu positionieren,
(d) ein System zur durchgehenden Verriegelung des Wulstes (12) der Längsränder der Abdeckung (10) in der Öffnung (14) der Schienen (6), das es ermöglicht, nachdem der Wulst (12) in die Öffnung (14) eingeführt worden ist, ihn zu verriegeln, indem er in dem Maße, wie die Abdeckung (10) abgewickelt wird, unter dem benachbarten Flügel (6a) der entsprechenden Schiene festgeklemmt wird, und bei der Translation der Trommel in der zweiten Richtung den Wulst freizugeben, indem ihm ermöglicht wird, in dem Maße, wie die Abdeckung aufgewickelt wird, auszurasten,
**dadurch gekennzeichnet, dass** die Vorrichtung außerdem einen Gleitschuh zum Einrasten (50) des Wulstes umfasst, der gleitend in jede Schiene eingesetzt ist, in der ersten Translationsrichtung nach den Umlenkflächen (13), wobei der Gleitschuh zum Einrasten umfasst:
(e) einen oberen Abschnitt (50X), der sich außerhalb der Schienen befindet und am Translationsmechanismus befestigt ist, so dass er sich mit der Trommel entlang der Schienen bewegt, und
(f) einen unteren Abschnitt (50Y), der in die Öffnung (14) der entsprechenden Schiene eingesetzt ist und eine untere Grundfläche (51) umfasst, deren Geometrie so beschaffen ist, dass der Wulst unter den benachbarten Flügel (6a) geführt wird.

2. Vorrichtung nach Anspruch 1, wobei das Verriegelungssystem außerdem zwei flexible Riemen (31) umfasst, wobei jeder in der Lage ist,
• bei der Translation der Trommel in der ersten Richtung, sich in dem Maße, wie die Abdeckung (10) abgewickelt wird, in der Öffnung (14) der entsprechenden Schiene abzulegen, nachdem der Wulst (12) unter den benachbarten Flügel (6a) dieser Letzteren eingeführt worden ist, und ihn somit dort festzuklemmen, und
• bei der Translation der Trommel in der zweiten Richtung, sich aus der Öffnung (14) zurückzuziehen, wodurch der Wulst freigegeben wird und ihm ermöglicht wird, in dem Maße, wie die Abdeckung aufgewickelt wird, auszurasten.

3. Vorrichtung nach Anspruch 2, wobei der Translationsmechanismus einen Wagen (21) umfasst, der auf den Schienen (6) angebracht ist und in Querrichtung über die abzudeckende Oberfläche (3) hinausragt und die Trommel (2) trägt und an jedem seiner Enden umfasst:
• ein Antriebsrad (9), dessen Drehachse parallel zu derjenigen der Trommel (2) ist,
• wenigstens ein erstes, nachgelagertes Rädchen (33av) und wenigstens ein zweites, vorgelagertes Rädchen (33am), die auf den Schienen (6) ruhen und die Längstranslation des Wagens (21) ermöglichen, und wobei, in der ersten Bewegungsrichtung gesehen, das erste Rädchen nach und das zweite vor dem Antriebsrad (9) angebracht ist und beide mit Letzterem ein Dreieck bilden, von dem das Antriebsrad (9) einen oberen Scheitelpunkt bildet,
und wobei die zwei flexiblen Riemen (31) ausschließlich an jedem ihrer Enden (35) an den vier Ecken der abzudeckenden Oberfläche befestigt sind und sich auf folgende Weise entlang der Längsränder der abzudeckenden Oberfläche erstrecken:
• sie sind in der Öffnung (14) der Schienen (6) in den seitlichen Abschnitten (31a), die zwischen einem Befestigungspunkt (35) und dem am nächsten bei dem Befestigungspunkt befindlichen Rädchen (33av, 33am) enthalten sind, angeordnet, und
• sie decken das Antriebsrad (9) in dem mittleren Abschnitt (31b), der zwischen den zwei Rädchen (33av, 33am) vorhanden ist, ohne Gleiten ab.

4. Vorrichtung nach Anspruch 3, wobei jeder flexible Riemen (31) das nachgelagerte Rädchen (33av) abdeckt, welches ihn in der Öffnung der entsprechenden Schiene (6) ablegt, und wobei sich der Gleitschuh zum Einrasten (50) zwischen dem entsprechenden nachgelagerten Rädchen (33av) und der entsprechenden Umlenkfläche (13) befindet.

5. Vorrichtung nach einem der vorhergehenden Ansprüche, wobei die untere Grundfläche (51) des Gleitschuhs zum Einrasten (50) einen im Wesentlichen ebenen Abschnitt mit einer im Wesentlichen rechteckigen Geometrie umfasst, von welcher ein Abschnitt ausgenommen ist, der eine Aussparung (51R) definiert, die sich auf der Seite befindet, die der abzudeckenden Oberfläche benachbart ist, und eine maximale Breite und eine Höhe aufweist, die es ermöglichen, den Wulst unterzubringen, wobei sich diese Aussparung (51R) in Längsrichtung entlang der unteren Grundfläche von deren vorgelagertem Ende (51A) aus erstreckt, wo die Aussparung ihre maximale Breite aufweist, und sich allmählich schließt, bevor sie deren nachgelagertes Ende (51B) erreicht, wobei diese Aussparung ermöglicht, den Wulst unter dem benachbarten Flügel (6a) der Schiene zu führen.

6. Abdeckungsvorrichtung nach einem der vorhergehenden Ansprüche, wobei der vorgelagerte Abschnitt (51A) der unteren Grundfläche (51) abgeschrägt ist, um das Einführen des Wulstes (12) in die Aussparung (51R) des Gleitschuhs zum Einrasten (50) zu erleichtern.

7. Abdeckungsvorrichtung nach einem der vorhergehenden Ansprüche, wobei die Schiene ein C-förmiges Profilteil ist, das außer dem benachbarten Flügel (6a) einen zweiten, distalen Flügel (6b) umfasst, der von der abzudeckenden Oberfläche und dem benachbarten Flügel (6a) durch die Öffnung (14) getrennt ist und die gegenüberliegende Seite der Öffnung (14), die durch den benachbarten Flügel (6a) verschlossen ist, teilweise verschließt, und wobei jeder Gleitschuh zum Einrasten (50) eine vorstehende Auskragung (53) umfasst, die sich unter dem distalen Flügel (6b) oder unter dem benachbarten Flügel (6a) der entsprechenden Schiene erstreckt und den Gleitschuh zum Einrasten (50) und somit den Mechanismus zur Längstranslation, an welchem er befestigt ist, daran hindert, die Öffnung der entsprechenden Schiene zu verlassen.

8. Abdeckungsvorrichtung nach Anspruch 7, welche einen Befestigungs-Gleitschuh (60) umfasst, der gleitend in jede Schiene eingesetzt ist und sich zwischen der entsprechenden Umlenkfläche (13) des entsprechenden vorgelagerten Rädchens (33am) befindet, wobei der Befestigungs-Gleitschuh umfasst:
• einen oberen Abschnitt, der sich außerhalb der Schienen befindet und am Translationsmechanismus befestigt ist, so dass er sich mit der Trommel entlang der Schienen bewegt, und
• einen unteren Abschnitt, der in die Öffnung (14) der entsprechenden Schiene eingesetzt ist, wobei der untere Abschnitt eine vorstehende Auskragung umfasst, die sich unter dem distalen Flügel (6b) der entsprechenden Schiene erstreckt und den Befestigungs-Gleitschuh (60) daran hindert, und somit den Gleitschuh zum Einrasten (50) dabei unterstützt, den Mechanismus zur Längstranslation, an welchem er befestigt ist, daran zu hindern, die Öffnung der entsprechenden Schiene zu verlassen.

9. Abdeckungsvorrichtung nach einem der vorhergehenden Ansprüche, wobei die Umlenkfläche (13) wenigstens teilweise von einer inneren Fläche einer Nut (52) gebildet wird, die im oberen Abschnitt (50X) des Gleitschuhs zum Einrasten (50) angeordnet ist:
• wobei die Nut eine stirnseitige Öffnung aufweist, die sich auf einer zu der entsprechenden Schiene (6) parallelen Fläche erstreckt und der abzudeckenden Oberfläche zugewandt ist,
• wobei diese Öffnung eine Breite aufweist, die kleiner als die Abmessung des Wulstes (12) ist, der sich im Inneren der Nut befindet, und größer als die Dicke der Abdeckung (10) ist, welche durch die Öffnung aus der Nut hinausführt, so dass die Abdeckung entlang der Nut gleiten kann, der Wulst sich jedoch nicht durch die stirnseitige Öffnung aus ihr hinausbewegen kann, und
• wobei die Nut einen gekrümmten Querschnitt aufweist, der es ermöglicht, den Wulst der Abdeckung (10) tangential in Richtung des unteren Abschnitts (50Y) des Gleitschuhs zum Einrasten und somit unter den benachbarten Flügel (6a) der entsprechenden Schiene zu bewegen.

10. Abdeckungsvorrichtung nach Anspruch 9, wobei der obere Abschnitt des Gleitschuhs zum Einsetzen eine im Wesentlichen zylindrische Umlenkrolle (13w) umfasst, die um eine zur Querrichtung der Abdeckung parallele Achse drehbar gelagert ist, wobei diese Umlenkrolle ein distales Ende (13d), das von der abzudeckenden Oberfläche entfernt ist, und ein proximales Ende (13p), das dieser Oberfläche benachbart ist, aufweist, und wobei der gekrümmte Abschnitt wenigstens teilweise von dem distalen Ende (13d) der Umlenkrolle gebildet wird, an welchem der entsprechende Wulst der Abdeckung anliegt, welche die Umlenkrolle (13) teilweise umhüllt, um ihre Ausrichtung zu ändern.

11. Abdeckungsvorrichtung nach Anspruch 10, wobei das distale Ende (13d) jeder Umlenkrolle (13w), das sich auf jeder Seite der abzudeckenden Oberfläche befindet, an dem entsprechenden Wulst (12) anliegt, wodurch es auf die Abdeckung bei ihrer Abwicklung eine Zugbeanspruchung in der Querrichtung ausübt, wobei diese Beanspruchung bei der Verriegelung der Abdeckung (10) in den Schienen (6) aufrechterhalten wird.

12. Abdeckungsvorrichtung nach einem der Ansprüche 9 bis 11, welche außerdem ein Spannlager (15) umfasst, welches an jedem Gleitschuh zum Einrasten (50) drehbar um eine quer verlaufende, vorzugsweise zu den Querrändern der Abdeckung senkrechte Drehachse gelagert ist und welches den Wulst der Abdeckung in der Nut (13) des entsprechenden Gleitschuhs zum Einrasten führt.

13. Abdeckungsvorrichtung nach einem der Ansprüche 7 bis 12, wobei der Gleitschuh zum Einrasten eine Struktur aus Polymer und eine Verstärkungseinlage (70) aus Metall oder aus faserverstärktem Verbundmaterial umfasst, um den Gleitschuh zum Einrasten lokal zu versteifen, und wobei vorzugsweise
• die Verstärkungseinlage eine Form eines "L" oder umgekehrten "T" hat, mit einem horizontalen ersten Abschnitt (70H), der die Auskragung (53) verstärkt, und einem vertikalen Abschnitt (70V), der zu dem horizontalen Abschnitt orthogonal ist und sich vom unteren Abschnitt (50Y) bis zum oberen Abschnitt (50X) des Gleitschuhs zum Einrasten erstreckt, und
• die Struktur aus Polymer einerseits einen Hohlraum umfasst, in welchen dann der vertikale Abschnitt der Verstärkungseinlage eingesetzt wird, und andererseits eine Vertiefung in einem unteren Teil der Auskragung, damit alle Flächen des Gleitschuhs zum Einrasten, die mit der Schiene in Kontakt kommen, Flächen der Struktur aus Polymer sind.

14. Verwendung einer Vorrichtung nach einem der vorhergehenden Ansprüche zum Abdecken einer Oberfläche (3), welche gewählt ist aus:
(a) einem Becken, das mit einer Flüssigkeit gefüllt ist oder nicht, wie etwa einem Schwimmbad, einem Becken zum Rückhalten, zur Aufbereitung oder zur Entsalzung von Wasser;
(b) einem Sportgelände, wie etwa einem Tennisplatz oder einem Cricketfeld;
(c) einer Fahrzeugkarosserie;
(d) einer Glasfläche, wie etwa einem Treibhaus, einem Wintergarten oder einem Fahrzeugfenster.

15. Verfahren zum Abdecken einer Oberfläche (3) mit einer Abdeckung (10) unter Verwendung einer Abdeckungsvorrichtung nach einem der Ansprüche 3 bis 13, wobei:
(a) der Wagen sich an einem Ende der abzudeckenden Oberfläche befindet, wobei ein Querrand der Abdeckung an diesem Ende der Oberfläche befestigt ist und der Rest der Abdeckung auf die Trommel aufgewickelt ist,
(b) Vorwärtsbewegen des Wagens in der ersten Richtung über der abzudeckenden Oberfläche entlang der Schienen (6), und somit Abwickeln der Abdeckung, welche sich auf dem der Trommel nachgelagerten Oberflächenabschnitt ausbreitet, von der Trommel, und gleichzeitig Führen und Halten des Wulstes (12) jedes Längsrandes der Abdeckung gegenüber der Öffnung (14) der entsprechenden Schiene (6) in dem Maße, wie sich die Trommel vorwärtsbewegt,
(c) mithilfe des Gleitschuhs zum Einrasten den Wulst in die Öffnung (14) der Schiene hineindrücken und ihn unter den benachbarten Flügel (6a) der Schiene führen, wobei
(d) der Wulst dort durch das unmittelbar danach erfolgende Eindringen, in dieselbe Öffnung, des seitlichen Abschnitts (31a) des Riemens, der dem nachgelagerten Rädchen (33av), auf die Translationsrichtung des Wagens bezogen, hinter ihm unmittelbar benachbart ist, blockiert wird.

## Claims

1. Device (1) for covering a surface (3) comprising:
(a) a substantially rectangular cover (10) having two longitudinal edges opposite one another and two transverse edges opposite one another, each longitudinal edge being equipped with a projecting bead (12) extending along said edge,
(b) a drum (2) mounted with the ability to rotate able to roll up and unroll the cover (10), said drum (2) being mounted on a mechanism for longitudinal translation along rails (6) placed one on each side of said surface (3) and each made up of a profile section having an opening (14) on one of its faces and facing away from the surface that is to be covered, said face comprising at least an adjacent flange (6a) situated on the side adjacent to the surface that is to be covered and partially closing said opening (14), said translation mechanism allowing longitudinal translation of the drum in a first direction that causes the cover to be unrolled and deployed over the surface that is to be covered (3) and in a second direction that causes the cover to be rolled up and removed from said surface (3),
(c) a deflection surface (13) provided on each side of the surface that is to be covered so as to guide and position said bead (12) of each edge of the cover to face the opening (14) in the corresponding rail (6) as the drum effects the translational movement in the first direction causing the cover to unroll,
(d) a system for continuously locking the bead (12) of longitudinal edges of the cover (10) in the opening (14) of said rails (6) making it possible, once the bead (12) has entered the opening (14), to lock it by wedging it under the adjacent flange (6a) of the corresponding rail as the cover (10) is gradually unrolled and, as the drum effects the translational movement in the second direction, to release the bead allowing it to disengage as the cover is gradually rolled up,
**characterized in that** the device additionally comprises a bead engagement shoe (50) slipped into each rail downstream of the deflection surfaces (13) in the first direction of translation, said engagement shoe comprising:
(e) an upper portion (50X), situated outside of the rails and fixed to the translation mechanism so as to move along the rails with the drum, and
(f) a lower portion (50Y), inserted in the opening (14) in the corresponding rail, comprising a lower base (51) the geometry of which is such that the bead is guided under the adjacent flange (6a).

2. Device according to Claim 1, in which the locking system additionally comprises two flexible belts (31), each one being able
• during the translational movement of the drum in the first direction, to lay itself down in the opening (14) in the corresponding rail as the cover (10) is gradually unrolled, once the bead (12) has been engaged under the adjacent flange (6a) of this rail, thus wedging it therein, and
• during the translational movement of the drum in the second direction, to remove itself from said opening (14), thus releasing the bead and allowing it to disengage as the cover is gradually rolled up.

3. Device according to Claim 2, in which the translation mechanism comprises a carriage (21) mounted on the rails (6) and transversely overhanging the surface (3) that is to be covered and supporting the drum (2) comprising at each of its ends:
• a drive wheel (9) the axis of rotation of which is parallel to that of said drum (2);
• at least a first downstream roller (33av) and at least a second upstream roller (33am) resting on the rails (6) and allowing the longitudinal translational movement of the carriage (21) and which are mounted the first one downstream and the second one upstream of the drive wheel (9) in the first direction of travel and therewith constitute a triangle of which the drive wheel (9) forms a top vertex;
and in which the two flexible belts (31) are fixed only at each of their ends (35) to the four corners of the surface that is to be covered and extend along the longitudinal edges of the surface that is to be covered, as follows:
• they are placed in the opening (14) in the rails (6) in the lateral sections (31a) comprised between a fixing point (35) and the roller (33av, 33am) closest to said fixing point, and
• they sit over the drive wheel (9) without slipping in the central section (31b) comprised between the two rollers (33av, 33am).

4. Device according to Claim 3, in which each flexible belt (31) sits over the downstream roller (33av) which lays it down in the opening in the corresponding rail (6) and in which the engagement shoe (50) is situated between said corresponding downstream roller (33av) and the corresponding deflection surface (13).

5. Device according to any one of the preceding claims, in which the lower base (51) of the engagement shoe (50) comprises a substantially planar portion the geometry of which is substantially that of a rectangular from which there has been removed a portion that defines a recess (51R) situated on the side adjacent to the surface that is to be covered and having a maximum width and a height that allow the bead to be accommodated, said recess (51R) extending longitudinally along the lower base from its upstream end (51A) where the recess has its maximum width and closes progressively before reaching its downstream end (51B), said recess allowing the bead to be guided under the adjacent flange (6a) of the rail.

6. Covering device according to the preceding claim, in which the upstream portion (51A) of the lower base (51) is chamfered to facilitate insertion of the bead (12) in the recess (51R) of the engagement shoe (50).

7. Covering device according to any one of the preceding claims, in which the rail is a C-section comprising, in addition to the adjacent flange (6a) a distal second flange (6b) separated from the surface that is to be covered by the opening (14) and the adjacent flange (6a) and partially closing the opposite side of the opening (14) closed by the adjacent flange (6a) and in which each engagement shoe (50) comprises a protruding step (53) extending under the distal flange (6b) or under the adjacent flange (6a) of the corresponding rail and preventing said engagement shoe (50) and, therefore, said longitudinal-translation mechanism to which it is fixed, from coming out of the opening in the corresponding rail.

8. Covering device according to Claim 7, comprising a securing shoe (60) slipped into each rail and situated between the corresponding deflection surface (13) of the upstream roller (33am), said securing shoe comprising:
• an upper portion situated outside the rails and fixed to the translation mechanism in such a way as to move along the rails with the drum, and
• a lower portion, inserted in the opening (14) in the corresponding rail, said lower portion comprising a protruding step extending under the distal flange (6b) of the corresponding rail and preventing said securing shoe (60) and therefore assisting the engagement shoe (50) in preventing said longitudinal-translation mechanism to which it is fixed from coming out of the opening in the corresponding rail.

9. Covering device according to any one of the preceding claims, in which the deflection surface (13) is at least partially formed of an interior surface of a slot (52) arranged in the upper portion (50X) of the engagement shoe (50):
• said slot having a face opening extending over a surface parallel to the corresponding rail (6) and facing towards the surface that is to be covered,
• said opening having a width less than the dimension of the bead (12) located inside the slot and greater than the thickness of the cover (10) which comes out of the slot via said opening, so that the cover can slide along the slot but the bead cannot leave the slot via the face opening, and
• said slot comprises a curved cross section allowing the bead of the cover (10) to be brought tangentially toward the lower portion (50Y) of the engagement shoe and thus under the adjacent flange (6a) of the corresponding rail.

10. Covering device according to Claim 9, in which the upper portion of the insertion shoe comprises a substantially cylindrical deflection pulley (13w) mounted with rotation about an axis parallel to the transverse direction of the cover, said deflection pulley having a distal end (13d) distant from the surface that is to be covered, and a proximal end (13p) adjacent to said surface, and in which the curved section is formed at least partially of the distal end (13d) of the deflection pulley against which the corresponding bead of the cover which is partially wrapped around said deflection pulley (13) rests in order to change orientation.

11. Covering device according to Claim 10, in which the distal end (13d) of each deflection pulley (13w) situated on either side of the surface to be covered bears against the corresponding bead (12) thus applying a tensile stress to the cover in the transverse direction as it is unrolled, said stress being maintained as the cover (10) is being locked into the rails (6).

12. Covering device according to any one of Claims 9 to 11, additionally comprising a tensioning bearing (15) mounted with the ability to rotate on each engagement shoe (50) about a transverse axis of rotation preferably normal to the transverse edges of the cover and which guides the bead of the cover to the slot (13) of the corresponding engagement shoe.

13. Covering device according to any one of Claims 7 to 12, in which the engagement shoe comprises a structure made of polymer and a reinforcing insert (70) made of metal or made of fiber-reinforced composite in order to stiffen the engagement shoe locally and, for preference,
• the reinforcing insert is in the shape of an L or of an inverted T, with a horizontal first portion (70H) reinforcing the step (53) and a vertical portion (70V), normal to the horizontal portion and extending from the lower portion (50Y) to the upper portion (50X) of the engagement shoe, and
• the polymer structure comprises, on the one hand, a cavity into which the vertical portion of the reinforcing insert is inserted and, on the other hand, a depression in a lower part of the step, so that all the surfaces of the engagement shoe which are in contact with the rail are surfaces of the structure made of polymer.

14. Use of a device according to any one of the preceding claims for covering a surface (3) selected from:
(a) a basin which may or may not be filled with a liquid, such as a pool, a water desalination, treatment or retaining basin;
(b) a sports ground, such as a tennis court or a cricket pitch;
(c) a vehicle bodyshell,
(d) a glazed surface such as a greenhouse, a conservatory or a vehicle window.

15. Method for covering a surface (3) with a cover (10) using a covering device according to any one of Claims 3 to 13, in which:
(a) the carriage is positioned at one end of the surface that is to be covered, with one transverse edge of the cover secured to this end of the surface and the rest of the cover being rolled up around the drum,
(b) the carriage is advanced in the first direction over the surface that is to be covered along the rails (6), and thus the cover is unrolled from the drum and deployed over the surface portion downstream of the drum while at the same time the bead (12) of each longitudinal edge of the cover is guided and kept facing the opening (14) of the corresponding rail (6) as the drum gradually advances,
(c) using the engagement shoe, the bead is forced into the opening (14) in the rail and guided under the adjacent flange (6a) of said rail, where
(d) the bead is blocked therein by the immediately subsequent insertion into the same opening of the lateral section (31a) of the belt directly adjacent to the downstream roller (33av) downstream in the direction of translation of the carriage.
